(19) Europäisches Patentamt / European Patent Office / Office européen des brevets

(11) **EP 2 593 288 B2**

(12) **NEUE EUROPÄISCHE PATENTSCHRIFT**
Nach dem Einspruchsverfahren


(45) Veröffentlichungstag und Bekanntmachung des Hinweises auf die Entscheidung über den Einspruch:
**16.04.2025 Patentblatt 2025/16**

(45) Hinweis auf die Patenterteilung:
**11.10.2017 Patentblatt 2017/41**

(21) Anmeldenummer: **11735420.9**

(22) Anmeldetag: **13.07.2011**

(51) Internationale Patentklassifikation (IPC):
***B29C 47/40*** $^{(2006.01)}$ ***B29C 47/10*** $^{(2006.01)}$
***C08L 69/00*** $^{(2006.01)}$ ***B29C 47/60*** $^{(2006.01)}$

(52) Gemeinsame Patentklassifikation (CPC):
(C-Sets verfügbar)
**B29C 48/395; B29C 48/08; B29C 48/251; B29C 48/2517; B29C 48/29; B29C 48/40; B29C 48/402; B29C 48/405; B29C 48/505; B29C 48/57; B29C 48/65; C08L 51/04; C08L 69/00;**
B29C 48/404; B29C 2793/0054; (Forts.)

(86) Internationale Anmeldenummer:
**PCT/EP2011/061950**

(87) Internationale Veröffentlichungsnummer:
**WO 2012/007501 (19.01.2012 Gazette 2012/03)**


(54) **VORRICHTUNG UND VERFAHREN ZUR HERSTELLUNG VON PRODUKTEN AUS PIGMENTHALTIGEN POLYMERMISCHUNGEN**

APPARATUS AND PROCESS FOR PRODUCING PRODUCTS FROM PIGMENT-CONTAINING POLYMER MIXTURES

DISPOSITIF ET PROCÉDÉ DE FABRICATION DE PRODUITS À PARTIR DE MÉLANGES POLYMÈRES CONTENANT DES PIGMENTS


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2010 EP 10169542**

(43) Veröffentlichungstag der Anmeldung:
**22.05.2013 Patentblatt 2013/21**



(73) Patentinhaber: **Covestro Intellectual Property GmbH & Co. KG**
**51373 Leverkusen (DE)**

(72) Erfinder:
- **DERFUß, Birgit**
  **45472 Mülheim an der Ruhr (DE)**
- **RUDOLF, Reiner**
  **40764 Langenfeld (DE)**
- **BIERDEL, Michael**
  **51373 Leverkusen (DE)**
- **CONZEN, Carsten**
  **51373 Leverkusen (DE)**

(74) Vertreter: **Levpat**
**c/o Covestro AG**
**Gebäude 4825**
**51365 Leverkusen (DE)**



(56) Entgegenhaltungen:
**WO-A1-2009/153000 DE-A1- 102004 010 553**
**DE-T2- 69 519 431 US-A- 4 352 568**
**US-A- 5 487 602 US-A1- 2009 088 514**
**US-B1- 6 565 358**

- **SVEN WIESSNER: "Kontinuierliche Herstellung von Legierungen aus Elastomerpartikeln und Polypropylen durch reaktive Aufbereitung in einem Gleichdralldoppelschneckenextruder", 1 January 2009 (2009-01-01), XP055368052, Retrieved from the Internet <URL:http://www.qucosa.de/fileadmin/data/qucosa/documents/5828/data/diss.pdf> [retrieved on 20170427]**
- **ISHIKAWA T ET AL: "3-D NUMERICAL SIMULATIONS OF NONISOTHERMAL FLOW IN CO-ROTATING TWINSCREW EXTRUDERS", POLYMER ENGINEERING AND SCIENCE, BROOKFIELD CENTER, US, vol. 40, no. 2, 1 February 2000 (2000-02-01), pages 357 - 364, XP000926883, ISSN: 0032-3888, DOI: DOI:10.1002/PEN.11169**


**EP 2 593 288 B2**

(52) Gemeinsame Patentklassifikation (CPC): (Forts.)
B29K 2009/00; B29K 2019/00; B29K 2055/02;
B29K 2069/00; B29K 2105/0005; B29K 2105/0032;
C08L 25/12

C-Sets
**C08L 69/00, C08L 2666/02**

## Beschreibung

Gegenstand der Erfindung sind eine Vorrichtung und ein Verfahren zur Herstellung von pigmenthaltigen, insbesondere rußhaltigen Polymermischungen enthaltend Polycarbonate, gegebenenfalls Elastomere und/oder weitere Komponenten, wobei die daraus hergestellten Formkörper nach der Formgebung durch Spritzguss- oder Extrusions-Verarbeitung verbesserte Oberflächeneigenschaften und verbesserte mechanische Eigenschaften aufweisen. Die Herstellung der pigmenthaltigen insbesondere rußhaltigen Polymermischungen kann in einem einzigen Verfahrensschritt durch gleichzeitige Schmelzemischung aller Komponenten ohne Verwendung von in der Schmelze vorgemischten Pigment-Masterbatches erfolgen. Die Komponenten werden dabei in der Schmelze auf einem gleichsinnig rotierenden Zwei- oder Mehrwellenextruder unter temperaturschonenden Bedingungen gemischt, wobei dessen Extruderwellen im Bereich ab der Plastifizierzone bis zur Düsenplatte ein kleineres Verhältnis zwischen Schneckenaußendurchmesser und Gehäuseinnnendurchmesser sowie einen angepassten Wert der Summe aus Schneckenaußendurchmesser und Schneckenkerndurchmesser dividiert durch den doppelten Achsabstand aufweisen, als im Stand der Technik (z.B. in DE 10 2004 010 553 A1 ) bekannt. Bei der Herstellung von pigmenthaltigen, insbesondere rußhaltigen Polymermischungen, die Polycarbonat und gegebenenfalls Elastomere, wie z.B. teilchenförmige Kautschuke, insbesondere teilchenförmige Pfropfkautschuke enthalten, weisen die durch Spritzguss- oder Extrusions-Verarbeitung hergestellten Formkörper derartiger Polymermischungen oftmals Oberflächenstörungen auf, die auf eine unzureichende Dispergierung der Pigmentteilchen, auf eine Kombination aus unzureichend dispergierten Pigmentpartikeln und elastomeren Komponenten oder auf ungleichmäßig verteilte Elastomere zurückzuführen sind. Solche Oberflächenstörungen durch Agglomerate von Pigmentteilchen und/ oder Elastomere haben einen mittleren Durchmesser von 10 μm bis 300 μm. Die Bestimmung der Größe der Oberflächenstörungen kann beispielsweise mittels eines Auflichtmikroskops erfolgen. Dabei wird die Oberfläche z.B. durch ein Objektiv mit 2,5-facher Vergrößerung im Hellfeld bei einer Beleuchtung mit einer Halogen-100-Lichtquelle betrachtet und die erfassten Oberflächendefekte mit einer geeigneten Messeinrichtung (z.B. Bildauswertesoftware oder Skala am Objektiv) vermessen. Als mittlerer Durchmesser wird die Länge bezeichnet, die sich aus der Mittelung des maximalen Durchmessers in Längsrichtung und des maximalen Durchmessers in Querrichtung ergibt. Die Längsrichtung ist die Richtung, in der ein Partikel die größte Länge aufweist. Diese Oberflächenstörungen bewirken ein schlechtes optisches Erscheinungsbild, das mit dem bloßen Auge wahrnehmbar ist und in zahlreichen Anwendungen für derartige eingefärbte, insbesondere schwarz eingefärbte Polymermischungen als störend empfunden wird. Außerdem werden, wenn die Agglomerate vom Pigmentteilchen und/ oder Elastomeren eine bestimmte Größe überschreiten, die mechanischen Eigenschaften wie z.B. die Schlagzähigkeit oder die Reißdehnung verschlechtert.

Die Herstellung von rußhaltigen Polycarbonaten und die Entstehung von Oberflächenstörungen durch Aggregate von Kohlenstoff bei der Verarbeitung dieser Polycarbonatmischungen zu Folien sind bereits bekannt und in der JP 2008094984 beschrieben. Die Lösung des Problems der genannten Oberflächenstörung wird durch die Wahl geeigneter Partikelgrößen des Polycarbonats und geeigneter Dichten des Rußes bei der Mischungs-Herstellung gelöst. Es gibt aber keine Hinweise auf technische Maßnahmen bei der Schmelzemischung (Compoundierung) der Komponenten.

Auch US-PS 6 180 702 beschreibt Polycarbonatmischungen, die Ruß und Elastomere enthalten können und frei von Streifenbildungen auf der Oberfläche sind. Diese Polymermischungen, die nach üblichen Verfahren hergestellt werden, mit Hilfe von herkömmlichen Extrudern, enthalten zur Vermeidung der Oberflächendefekte spezielle Additive.

Die WO 2004/094128 beschreibt die Herstellung von Polymermischungen aus Polyarylenethern und Polyamiden mit Blockcopolymeren als Zähmodifikatoren und mit Ruß auf herkömmlichen Extrudern, die in den zwei verschiedenen Schmelzemischzonen unterschiedliche Längen-zu-Durchmesser-Verhältnisse aufweisen.

Die distributive Verteilung von Ruß-Masterbatches in High Density Polyethylen (HDPE) wird in der Veröffentlichung "Plastics Processing Technology Online-News Letter", January 04, 2001, No. 0011 E, von "The Japan Steel Works, Ltd." beschrieben. Durch Vergrößerung des Spaltes zwischen den Kämmen von Knetelementen und der Gehäusewand speziell in der Mischzone und der Gehäusewandung eines Doppelwellenextruders wird eine bessere Verteilung und Dispergierung des Ruß-Masterbatches im HDPE erreicht. In dieser Veröffentlichung von "The Japan Steel Works, Ltd." Ist der Ruß im Masterbatch bereits dispergiert, wodurch sich diese Lösung nicht auf die Verwendung von reinem, nicht vordispergiertem Rußpulver, wie es auch Aufgabe der vorliegenden Erfindung ist, übertragen lässt. Weiterhin bleibt der Einfluss von zusätzlichen Elastomer-Komponenten, und anderen Polymeren auf die Homogenität der Mischungen unklar.

Im Aufsatz: "Effect of kneading block tip clearance on performance of co-rotating twin-screw extruders" in "ANTEC-Conference proceedings, 1999, Vol. 1" wird auf S.222 im Abschnitt "Mixing" festgestellt, dass die Vergrößerung des Spaltes zwischen den Kämmen von Knetelementen und der Gehäusewand eines Zweiwellenextruders im Fall von HDPE-Ruß-Masterbatch-Mischungen, die Dispergierung des Ruß-Masterbatches in der HDPE-Matrix im Vergleich zu engeren Spalten verschlechtert. Ein Fachmann würde also im Lichte dieser Veröffentlichung von einer Vergrößerung des Spaltes Abstand nehmen, wenn er vor dem in der vorliegenden Erfindung zu lösenden Problem steht.

Im Stand der Technik, wie in DE 10 2004 010 553 A1 beispielsweise werden vergrößerte Spaltbreiten zwischen Schneckenkamm (Schneckenaußendurchmesser) und Gehäusewand (Gehäuseinnendurchmesser) offenbart. Diese Schneckenelemente sollen für scherempfindliche Produkte eingesetzt werden, da eine temperaturschonende Compoundierung durch diese Schneckenelemente ermöglicht wird.

US 4 352 568 A offenbart eine Doppelschnecke zur Extrusion von Polymermischungen, deren Schneckenwellen mit exzentrisch angeordneten Knetscheiben besetzt sind, wobei das Spiel zwischen den Knetscheiben und der Gehäusewandung größer ist als das Spiel zwischen den einander zugeordneten Knetscheiben. US 4 352 568 A liegt die Aufgabe zu Grunde, eine verschleißarme Schneckenmaschine zum stoffschonenden Plastifizieren unter gleichmäßiger Scherbeanspruchung des gesamten Stoffvolumens zur Verfügung zu stellen.

Der Literaturartikel "3-D Numerical Simulations of Nonisothermal Flow in Co-Rotating Twin-Screw Extruders" (Takeshi Ishikawa et al., Polymer Engineering and Science, Brookfield Center, US, Bd. 40, Nr. 2,1 Februar 2000, (2000-02-01), Seiten 357-364) offenbart numerische Simulationen zur Auslegung von gleichsinnig rotierenden Doppels-chneckenextrudern.

Auch US 5 487 602 A bewegt sich auf dem Gebiet der gleichsinnig rotierenden Doppelschneckenextruder zur Verarbeitung von Kunststoffen. Auch offenbart US 5 487 602 A Schneckenelemente mit vergrößertem Spiel gegenüber der Gehäuseinnenwand, wodurch einerseits die Temperaturbelastung der zu verarbeitenden Kunststoffe verringert wird, andererseits die Scherkräfte im Kunststoff erhöht werden.

Weder US 4 352 568 A, noch der Literaturartikel "3-D Numerical Simulations of Nonisothermal Flow in Co-Rotating Twin-Screw Extruders", noch US 5 487 602 A geben aber einen Hinweis darauf, wie Pigmentpartikel, insbesondere Ruß, beim Mischen mit Thermoplast-Compounds, bevorzugt Polycarbonat-Compounds, unter temperaturschonenden Bedingungen zerkleinert und homogen in der Polymermatrix verteilt werden können. Auch gehen diese Veröffentlichungen weder auf eine Vermeidung von Oberflächendefekten auf den aus Mischungen von Pigmenten und Thermoplast-Compounds hergestellten Formkörpern ein, noch darauf ein, dass die Herstellung der pigmenthaltigen insbesondere rußhaltigen Polymermischungen in nur einem einzigen Verfahrensschritt durch gleichzeitige Schmelzemischung aller Komponenten ohne Verwendung von in der Schmelze vorgemischten Pigment-Masterbatches erfolgen kann.

WO 2009/153000 A1 offenbart Schneckenelemente für gleichsinnig rotierende mehrwellige Schneckenextruder zur Verarbeitung plastischer Massen, mit denen einerseits lokale Überhitzungen der plastischen Massen verhindert werden sollen, andererseits ein guter Druckaufbau erzielt werden kann. WO 2009/153000 A1 spricht dabei auch das Einarbeiten von beispielsweise Ruß in die plastischen Massen an. Jedoch gibt auch WO 2009/153000 A1 keinen Hinweis darauf, wie Pigmentpartikel, insbesondere Ruß, beim Mischen mit Thermoplast-Compounds, bevorzugt Polycarbonat-Compounds, unter temperaturschonenden Bedingungen zerkleinert werden können, um homogen in die Polymermatrix verteilt werden zu können. Außerdem geht auch WO 2009/153000 A1 weder auf eine Vermeidung von nennenswerten Oberflächendefekten auf den aus Mischungen von Pigmenten und Thermoplast-Compounds hergestellten Formkörpern ein, noch darauf ein, dass die Herstellung der pigmenthaltigen insbesondere rußhaltigen Polymermischungen in nur einem einzigen Verfahrensschritt durch gleichzeitige Schmelzemischung aller Komponenten ohne Verwendung von in der Schmelze vorgemischten Pigment-Masterbatches erfolgen kann.

Da aus dem Stand der Technik keine befriedigenden Maßnahmen zur Lösung der vorliegenden Aufgabe abzuleiten sind, wurde nach geeigneten Maßnahmen gesucht, um Pigmentpartikel, insbesondere Ruß, beim Mischen mit Thermoplast-Compounds, bevorzugt Polycarbonat-Compounds, gegebenenfalls enthaltend Elastomere, bevorzugt elastomerhaltige Polycarbonat Compounds unter temperaturschonenden Bedingungen so zu zerkleinern und homogen in der Polymermatrix zu verteilen, dass es zu keinen nennenswerten Oberflächendefekten auf den aus solchen Mischungen hergestellten Formkörpern kommt. Als Oberflächendefekte werden Unebenheiten unmittelbar an der Formteiloberfläche verstanden. Bei den Unebenheiten kann es sich sowohl um Einfallstellen als auch um Erhebungen handeln, welche die Rauhigkeit der Oberfläche vergrößern. Die Einfallstellen bzw. Erhebungen haben üblicherweise einen mittleren Durchmesser zwischen 10 $\mu$m und 300 $\mu$m, wobei 10 $\mu$m die untere Auflösungsgrenze der verwendeten Messmethode darstellt. D.h. es können auch kleinere Oberflächendefekte auftreten.

Die Tiefe der Einfallstellen bzw. die Höhe der Erhebungen liegt zwischen 50 nm und 100 $\mu$m. Die Bestimmung der Tiefe der Einfallstellen erfolgt über CLSM (Confocal Laser Scanning Microscopy) Topographie.

Aufgabe der Erfindung war es daher, Polymermischungen enthaltend Polycarbonat, gegebenenfalls Elastomere und Pigmente, insbesondere Ruß als Pigment, sowie ggf. weiteren Additive und Thermoplaste herzustellen, in denen die genannten Komponenten in der Polycarbonat-Matrix hervorragend dispergiert und so gleichmäßig verteilt sind, dass durch Spritzguss oder Extrusion dieser Polycarbonat-Mischungen erhaltene Formkörper eine störungsfreie Oberfläche sowie verbesserte mechanische Eigenschaften aufweisen. Die Formkörper-Oberfläche weist durch das erfindungsgemäße Verfahren und Verwendung der erfindungsgemäßen Vorrichtung eine geringere Anzahl von Störstellen größer 10 $\mu$m auf, die durch Agglomerate von unzureichend dispergierten Pigmentpartikeln und/ oder Elastomeren herrühren. Weitere Aufgabe der Erfindung war die Compoundierung der genannten Komponenten in einem einzigen Aufschmelzschritt auf dichtkämmenden, gleichsinnig rotierenden Zwei- oder Mehrwellenextrudern bei möglichst niedrigem Energie-Eintrag unter Vermeidung von lokalen Temperaturspitzen und vorzugsweise ohne Verwendung von bereits compoundierten Pigment-Masterbatches, wie z.B. Ruß-Masterbatches.

Überraschenderweise wurde nun gefunden, dass die erfindungsgemäße Aufgabe dadurch gelöst wird, dass die

Polycarbonat-, Elastomer- und Pigment-, insbesondere Ruß-enthaltenden PolymerZusammensetzungen auf einem gleichsinnig rotierenden, dichtkämmenden Zweiwellenextruder in der Schmelze gemischt werden, dadurch gekennzeichnet, dass zumindest im Bereich ab der Plastifizierzone und den sich daran anschließenden Zonen in Förderrichtung bis zum Polymerschmelzeaustrag an der Düsenplatte über wenigstens 50 %, bevorzugt wenigstens 75 %, besonders bevorzugt wenigstens 90 % der Länge das Verhältnis zwischen Schneckenaußendurchmesser und Gehäuseinnendurchmesser größer oder gleich 96,4 und kleiner 98,4 % ist, wobei es innerhalb dieses Bereichs ab der Plastifizierzone und den sich daran anschließenden Zonen in Förderrichtung bis zum Polymerschmelzeaustrag an der Düsenplatte variieren darf, wobei die Summe aus Schneckenaußendurchmesser und Schneckenkerndurchmesser dividiert durch den doppelten Achsabstand größer oder gleich 97,9% und kleiner 99,1% ist, und wobei und wobei zumindest ab der Plastifizierzone des Extruders und den sich daran anschließenden Zonen in Förderrichtung bis zum Polymerschmelzeaustrag an der Düsenplatte mindestens ein Förderelement vorhanden ist, wobei bei mindestens einem Förderelement das Verhältnis zwischen Schneckenaußendurchmesser (Da) und Gehäuseinnendurchmesser größer oder gleich 96,4 und kleiner 98,4 % ist und die Summe aus Schneckenaußendurchmesser (Da) und Schneckenkerndurchmesser (Di) dividiert durch den doppelten Achsabstand größer oder gleich 97,9% und kleiner 99,1 % ist. Erfidungsgemäß liegt das Verhältnis zwischen Schneckenaußendurchmesser und Gehäuseinnendurchmesser in einem Bereich von größer oder gleich 96,4 % bis kleiner 98,4%, bevorzugt 98,2%. Erfindungsgemäß liegt die Summe aus Schneckenaußendurchmesser und Schneckenkerndurchmesser dividiert durch den doppelten Achsabstand bei größer oder gleich 97,9% bis kleiner 99,1 %. Daraus ergeben sich im Vergleich zum Stand der Technik, der z.B. in DE 10 2004 010 553 A1 beschrieben wird, angepasste Spalte zwischen Schneckenaußendurchmesser und Gehäusewandung sowie zwischen Schneckenkamm und Schneckengrund der gegenüberliegenden Schnecke.

In der erfindungsgemäßen Ausführungsform befindet sich im Bereich ab der Plastifizierzone und den sich daran anschließenden Zonen in Förderrichtung bis zum Polymerschmelzeaustrag an der Düsenplatte wenigstens ein Förderelement, das die oben genannten Verhältnisse zwischen Schneckenaußendurchmesser und Gehäuseinnendurchmesser und Summe aus Schneckenaußendurchmesser und Schneckenkerndurchmesser dividiert durch den doppelten Achsabstand aufweist. In diesem Zusammenhang weist wenigstens ein Förderelement die oben genannten Verhältnisse auf.

In einer bevorzugten Ausführungsform befinden sich im Bereich ab der Plastifizierzone und den sich daran anschließenden Zonen in Förderrichtung bis zum Polymerschmelzeaustrag an der Düsenplatte wenigstens ein Förderelement und wenigstens ein Knetelement, die die oben genannten Verhältnisse zwischen Schneckenaußendurchmesser und Gehäuseinnendurchmesser und Summe aus Schneckenaußendurchmesser und Schneckenkerndurchmesser dividiert durch den doppelten Achsabstand aufweisen. In diesem Zusammenhang weisen sowohl wenigstens ein Förderelement als auch wenigstens ein Knetelement die oben genannten Verhältnisse auf.

Als Plastifizierzone wird der Bereich des Extruders bezeichnet, in dem feste Polymergranulate in den schmelzeflüssigen Zustand überführt werden. Ausgehend vom Extrudereinzug folgt nach einem Bereich, der vollständig aus Förderelementen besteht, ein Bereich, in dem Knet- und/oder Mischelemente eingesetzt werden. Die Plastifizierzone, wie sie in diesem Patent beschrieben ist, beginnt bei dem vorletzten Förderelement vor dem ersten Element, das kein Förderelement ist. Im Anschluss an die Plastifizierzone können eine oder mehrere Misch- und/oder Knetzonen, eine oder mehrere Förderzonen und eine Austrags- bzw. Druckaufbauzone folgen.

Aus dem Verhältnis zwischen Schneckenaußendurchmesser und Gehäuseinnendurchmesser können Spaltbreiten zwischen Schneckenkamm und Extruder-Gehäusewandung (d1 in Fig. 1) nach, dem Fachmann bekannten Beziehungen berechnet werden. Weiterhin weist in der vorliegenden Erfindung auch der Wert der Summe aus Schneckenaußendurchmesser Da (Fig. 2) und Schneckenkerndurchmesser Di (Fig. 2) dividiert durch den doppelten Achsabstand einen anderen Wert auf, als aus dem Stand der Technik bekannt. Aus den beschriebenen Angaben und bei Kenntnis des Achsabstands der beiden Wellen kann der Fachmann den Spalt zwischen dem Außendurchmesser der einen Schnecke und dem Kerndurchmesser der anderen Schnecke (d2 in Fig. 1) bestimmen. Eine kleinere Summe aus Schneckenaußendurchmesser Da (Fig. 2) und Schneckenkerndurchmesser Di (Fig. 2) dividiert durch den doppelten Achsabstand entspricht einem größeren Spiel zwischen dem Kamm der einen Schnecke und dem Grund der anderen Schnecke.

In dem System aus Schneckenaußendurchmesser und Gehäuseinnendurchmesser wird zur Berechnung der Spaltbreite jeweils der Außendurchmesser eines Elementes mit dem Gehäuse verglichen, welches das entsprechende Element im eingebauten Zustand umgibt. Dieses Gehäuse wird im Weiteren als dem Schneckenelement zugehöriges Gehäuse bezeichnet. Kann ein Schneckenelement nicht eindeutig einem Gehäusebauteil zugeordnet werden, wenn es sich wenigstens zum Teil über zwei Gehäuse erstreckt, so wird das entsprechende Element für die Berechnung virtuell in zwei Teile geteilt. Jeweils dem einen Teil der Elementlänge wird der Anfangs-Außendurchmesser des Schneckenelements (Da_Anfang in Fig. 2) und dem anderen Teil der End-Außendurchmesser des Schneckenelements (Da_Ende in Fig. 2) als Schneckenaußendurchmesser zugeordnet. Der erste Teil des so virtuell erzeugten Schneckenelements wird dem ersten Gehäuse, der zweite Teil des Schneckenelements wird dem zweiten Gehäuse zugeordnet. Befindet sich das Schneckenelement vollständig in einem Gehäuse, so wird das Schneckenelement zur Berechnung der Spalt-breite dem

Gehäuse zugeordnet, in dem es sich befindet.

Erfindungsgemäß muss ein Längenanteil von mindestens 50 % der Schnecke im Bereich ab der Plastifizierzone des Extruders und den sich daran anschließenden Zonen in Förderrichtung bis zum Polymerschmelzeaustrag an der Düsenplatte in dem angegebenen Bereich für das Verhältnis zwischen Schneckenaußendurchmesser und Gehäuseinnendurchmesser und zusätzlich in dem angegebenen Bereich für die Summe aus Schneckenaußendurchmesser und Schneckenkerndurchmesser dividiert durch den doppelten Achsabstand liegen. Bevorzugt liegt ein Längenanteil von wenigstens 75 % und besonders bevorzugt ein Längenanteil von wenigstens 90 % der Schnecke bezogen auf das, dem jeweiligen Schneckenelement zugehörigen Gehäuse in diesen Bereichen.

Aus dem Verhältnis zwischen Schneckenaußendurchmesser und Gehäuseinnendurchmesser können Spaltbreiten zwischen Schneckenkamm und Extruder-Gehäusewandung (d1 in Fig. 1) nach dem Fachmann bekannten Beziehungen berechnet werden.

Aus den beschriebenen Angaben und bei Kenntnis des Achsabstandes der beidem Wellen kann der Fachmann den Spalt zwischen dem Außendurchmesser der einen Schnecke und dem Kerndurchmesser der anderen Schnecke (d2 in Fig. 1) bestimmen.

Die erfindungsgemäße Lösung der Aufgabe ist insofern überraschend, da eine Anpassung der Spalte nach dem zitierten Stand der Technik nicht zwangsläufig zur Lösung der erfinderischen Aufgabe führt. Ebenso überraschend ist auch das Ergebnis, dass eine Anpassung der Spalte allein in der Plastifizierzone des Extruders für sich genommen nicht zum gewünschten Ergebnis führt. Erst die zusätzliche Anpassung der Spaltbreite auch in den folgenden Extruderzonen in Flussrichtung hinter der Plastifizierzone führt zu der gewünschten Verbesserung der Dispergierung der Pigmentteilchen in der gegebenenfalls elastomerhaltigen Polycarbonatmischung. Die Oberflächen der durch Spritzgussverarbeitung erhaltenen Formkörper aus den so hergestellten Polycarbonatmischungen weisen im Vergleich zu den entsprechenden Polycarbonatmischungen, die auf konventionelle Weise mit einem anderen Verhältnis zwischen Schneckenaußendurchmesser und dem zughörigen Gehäuseinnendurchmesser größer oder gleich 96,4 und kleiner 98,4 % und einer Summe aus Schneckenaußendurchmesser und Schneckenkerndurchmesser dividiert durch den doppelten Achsabstand von größer oder gleich 97,9% und kleiner 99,1 % auf Zweiwellenextrudern hergestellt wurden, weniger als die Hälfte an der Zahl an Störstellen auf. Störstellen sind Veränderungen auf der Oberfläche der Formkörper, die bei der Betrachtung der Oberfläche mit einem Auflichtmikroskop bei 2,5-facher Vergrößerung im Hellfeld erkennbar und größer als 10 $\mu$m sind.

Gegenstand der Erfindung ist demnach eine Vorrichtung zum Compoundieren von Polymerzusammensetzungen aus Polycarbonaten, Pigmenten, insbesondere Ruß und gegebenenfalls Elastomeren, sowie ein Verfahren zur Compoundierung dieser Polycarbonatzusammensetzungen mithilfe der erfindungsgemäßen Vorrichtung, Polymerzusammensetzungen die nach dem erfindungsgemäßen Verfahren hergestellt sind und Spritzgussgegenstände und Extrudate aus diesen Zusammensetzungen.

In einer bevorzugten Ausführungsform werden Zusammensetzungen durch das erfindungsgemäße Herstellverfahren erzeugt, enthaltend:

A) 10 - 99,899 Gew.-Teile, bevorzugt 20 - 98 Gew.-Teile, besonders bevorzugt 30 - 95 Gew.-Teile, aromatisches Polycarbonat und/oder aromatisches Polyestercarbonat und/oder andere Thermoplaste,

B) 0,1 - 75 Gew.-Teile, bevorzugt 0,2 - 60 Gew.-Teile, weiter bevorzugt 0,5 - 55 Gew.-Teile, besonders bevorzugt 0,5 - 52 Gew.-Teile, Elastomere, bevorzugt kautschukmodifiziertes Pfropfpolymerisat,

C) 0,001 - 10 Gew.-Teile, bevorzugt 0,01 - 5 Gew.-Teile, besonders bevorzugt 0,1 - 3 Gew.-Teile organische oder anorganische Pigmente, bevorzugt Ruß

D) gegebenenfalls 0 - 5 Gew.-Teile, bevorzugt 0,05 - 3 Gew.-Teile, besonders bevorzugt 0,1 - 1,5 Gew.-Teile Additive,

wobei alle Gewichtsteilangaben in der vorliegenden Anmeldung so normiert sind, dass die Summe der Gewichtsteile aller Komponenten A+B+C+D in der Zusammensetzung 100 ergeben.

<u>Komponente A</u>

Als erfindungsgemäß einsetzbare Thermoplaste (Komponente A) sind geeignet Polycarbonat, Polyamid, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste.

Bevorzugt eingesetzte Thermoplaste sind Polycarbonate.

Diese erfindungsgemäß einsetzbaren Polycarbonate (Komponente A) sind sowohl Homopolycarbonate als auch Copolycarbonate; die Polycarbonate können in bekannter Weise linear oder verzweigt sein.

Bevorzugte Herstellungsweisen der erfindungsgemäß zu verwendenden Polycarbonate, einschließlich der Polyestercarbonate, sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate.

Die Herstellung von Polycarbonaten unter Anwendung des erfindungsgemäßen Verfahrens erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Beispielhaft für die Herstellung von Polycarbonaten sei hier auf Schnell, "Chemistry and Physics of Polycarbonates", Polymer Reviews, Volume 9, Interscience Publishers, New York, London, Sydney 1964 verwiesen.

Die thermoplastischen Polycarbonate, die in dem erfindungsgemäßen Verfahren bevorzugt eingesetzt werden, einschließlich der thermoplastischen, aromatischen Polyestercarbonate haben ein mittleres Molekulargewicht Mw (ermittelt durch Messung der relativen Viskosität bei 25°C in $CH_2Cl_2$ und einer Konzentration von 0,5 g pro 100 ml $CH_2Cl_2$) von 12 000 bis 80 000, vorzugsweise von 15 000 bis 60 000 und insbesondere von 15 000 bis 32 000.

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die für die Umsetzung mit den Dihydroxyarylverbindungen geeigneten Diarylcarbonate bei der Schmelzeumesterung sind solche der allgemeinen Formel (II)

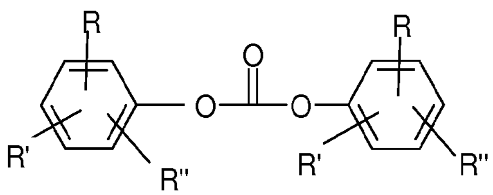

(II)

worin

R, R' und R" unabhängig voneinander gleich oder verschieden für Wasserstoff, lineares oder verzweigtes $C_1$-$C_{34}$-Alkyl, $C_7$-$C_{34}$-Alkylaryl oder C6-C34-Aryl stehen, R weiterhin auch -COO-R''' bedeuten kann, wobei R''' für Wasserstoff, lineares oder verzweigtes $C_1$-$C_{34}$-Alkyl, $C_7$-$C_{34}$-Alkylaryl oder $C_6$-$C_{34}$-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenylphenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl] -carbonat, Di-[4-(2-naphthyl)phenyl] -carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

Die zur Regelung des Molekulargewichtes im Phasengrenzflächenverfahren benötigten monofunktionellen Kettenabbrecher, wie beispielsweise Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre

Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Als Katalysatoren können im Schmelzumesterungsverfahren zur Herstellung von Polycarbonaten die in der Literatur bekannten basischen Katalysatoren wie beispielsweise Alkali- und Erdalkalihydroxyde und -oxyde und/oder Oniumsalze, wie z.B. Ammonium- oder Phosphoniumsalze, eingesetzt werden. Bevorzugt werden bei der Synthese Oniumsalze, besonders bevorzugt Phosphoniumsalze eingesetzt. Solche Phosphoniumsalze sind beispielsweise solche der allgemeinen Formel (IV)

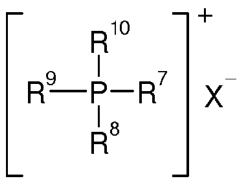

(IV)

worin

$R^7$-$R^{10}$ für gleiche oder verschiedene gegebenenfalls substituierte $C_1$-$C_{10}$-Alkyl-, $C_6$-$C_{14}$-Aryl-, $C_7$-$C_{15}$-Arylalkyl- oder $C_5$-$C_6$-Cycloalkylreste, bevorzugt für Methyl oder $C_6$-$C_{14}$-Aryl, besonders bevorzugt Methyl oder Phenyl stehen und

X- für ein Anion ausgewählt aus der Gruppe Hydroxyd, Sulfat, Hydrogensulfat, Hydrogencarbonat, Carbonat, Halogenid, bevorzugt Chlorid, und Alkylat oder Arylat der Formel $-OR^{11}$ stehen, wobei $R^{11}$ für einen gegebenenfalls substituierten $C_6$-$C_{14}$-Aryl-, $C_7$-$C_{15}$-Arylalkyl-oder $C_5$-$C_6$-Cycloalkylrest, $C_1$-$C_{20}$-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von $10^{-8}$ bis $10^{-3}$ mol, besonders bevorzugt in Mengen von $10^{-7}$ bis $10^{-4}$ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte $C_1$-$C_{10}$-Alkoxyde und $C_6$-$C_{14}$-Aryloxyde von Lithium, Natrium und Kalium, vorzugsweise Hydroxyde, gegebenenfalls substituierte $C_1$-$C_{10}$-Alkoxyde oder $C_6$-$C_{14}$-Aryloxyde von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionspektroskopie, 1 bis 500 ppb, vorzugsweise 5 bis 300 ppb und am meisten bevorzugt 5 bis 200 ppb, bezogen auf zu bildendes Polycarbonat. In bevorzugten Ausführungsformen des erfindungsgemäßen Verfahrens werden allerdings keine Alkalisalze verwendet.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens im Grenzflächenverfahren kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und / oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (< 2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und / oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und / oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

$C_1$-$C_4$-Alkyl steht im Rahmen der Erfindung beispielsweise für Methyl, Ethyl, n-Propyl, iso-Propyl, n-Butyl, sec.-Butyl, tert.-Butyl, $C_1$-$C_6$-Alkyl darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl,

1,2,2-Trimethylpropyl, 1-Ethyl-1-methylpropyl, 1-Ethyl-2-methylpropyl oder 1-Ethyl-2-methylpropyl, $C_1$-$C_{10}$-Alkyl darüber hinaus beispielsweise für n-Heptyl und n-Octyl, Pinakyl, Adamantyl, die isomeren Menthyle, n-Nonyl, n-Decyl, $C_1$-$C_{34}$-Alkyl darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für $C_6$-$C_{34}$-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

## Komponente B

Die Komponente B umfasst ein oder mehrere Pfropfpolymerisate von

B.1 5 bis 95 Gew.-%, vorzugsweise 20 bis 90 Gew.-%, besonders bevorzugt 30 bis 60 Gew.-%, wenigstens eines Vinylmonomeren

B.2 95 bis 5 Gew.-%, vorzugsweise 80 bis 10 Gew.-%, besonders bevorzugt 70 bis 40 Gew.-%, einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d50-Wert) von 0,05 bis 10,00 μm, vorzugsweise 0,10 bis 5,00 μm, weiter bevorzugt 0,20 bis 1,00 μm, und besonders bevorzugt von 0,25 bis 0,50 μm.

Monomere B.1 sind vorzugsweise Gemische aus

B.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(Cl-C8)-Alkylester, wie Methylmethacrylat, Ethylmethacrylat), und

B.1.2 1 bis 50 Gew.-Teilen Vinylcyanide (ungesättigte Nitrile wie Acrylnitril und Methacrylnitril) und/oder (Meth) Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid .

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt. Besonders bevorzugt ist reiner Polybutadienkautschuk.

Die Glasübergangstemperatur wird mittels dynamischer Differenzkalorimetrie (DSC) nach DIN EN 61006 bei einer Heizrate von 10 K/min mit Bestimmung der Tg als Mittelpunktbestimmung (Tangentenmethode) ermittelt.

Besonders bevorzugte Polymerisate B sind beispielsweise ABS-Polymerisate (Emulsions-, Masse- und Suspensions-ABS), wie sie z.B. in der DE-OS 2 035 390 (=US- PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation, hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C1 bis C8-Alkylester, beispielsweise Methyl-, Ethyl-, Butyl-, n-Octyl- und 2-Ethylhexylester; Halogenalkylester, vorzugsweise Halogen-C1-C8-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5,00, insbesondere 0,05 bis 2,00 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, $\alpha$-Methylstyrol, Acrylamide, Vinyl-C1-C6-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE- OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Komponente C

Als Pigmente (Komponente C) geeignet sind beispielsweise Titandioxid, Talkum, Calciumcarbonat, Bariumsulfat, Zinksulfid, Zinkoxid, Eisenoxid, Chromoxid, weitere organische und anorganische Farbpigmente, Graphit, Graphen, Carbon Nanotubes, Schichtsilikate, Ruß. Geeignete organische und anorganische Pigmente werden in Ullmann's Encyclopedia of Industrial Chemistry, Wiley-VCH, 7.Auflage 2010 beschrieben. Geeignete Rußtypen werden in Ullmann's Encyclopedia of Industrial Chemistry, Kapitel 6. Carbon black, Wiley-VCH, 7.Auflage 2010 beschrieben.

Erfindungsgemäß einsetzbare Ruße können nach dem Furnacerußverfahren, dem Gasrußverfahren oder dem Flammrußverfahren hergestellt werden, vorzugsweise nach dem Furnacerußverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt zwischen 10 und 600 $m^2/g$, bevorzugt zwischen 70 und 400 $m^2/g$. Die Rußpartikel können zur Einstellung von Oberflächenfunktionalitäten oxidativ nachbehandelt sein. Sie können hydrophob (beispielsweise Black Pearls 800 der Firma Cabot oder Printex 85 oder Flammruß 101 der Firma Evonik Degussa GmbH) oder hydrophil (beispielsweise Farbruß FW20 oder Printex 150 T der Firma Evonik Degussa GmbH) eingestellt sein. Sie können hochstrukturiert oder niederstrukturiert sein; damit wird ein Aggregationsgrad der Primärteilchen beschrieben.

Durch die Verwendung von geperlten Rußen kann eine bessere Dosierbarkeit erreicht werden.

Komponente D

Die erfindungsgemäßen Polymermischungen können darüber hinaus weitere Additive (Komponente D) enthalten, wie z.B. Flammschutzmittel, Thermo-Stabilisatoren, Antioxidantien, UV-Stabilisatoren und/ oder Entformungsmittel..

Geeignete Zusatzstoffe sind beispielsweise beschrieben in "Additives for Plastics Handbook, John Murphy,

Elsevier, Oxford 1999", im "Plastics Additives Handbook, Hans Zweifel, Hanser, München 2001".

Phosphorhaltige Flammschutzmittel sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Die Phosphorverbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Als Entformungsmittel geeignet sind bevorzugt welche ausgewählt aus der Gruppe, die Pentaerythrittetrastearat, Glycerinmonostearat, langkettige Fettsäureester, wie beispielsweise Stearylstearat und Propandiolstearat sowie deren Mischungen umfasst. Die Entformungsmittel werden eingesetzt in Mengen von 0,05 Gew.-% bis 2,00 Gew.-% bezogen auf die Formmasse, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Formmasse.

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyclohexyl-4-hydroxyphenyl)-propionsäure, Ester von 3,5-Di-tert-butyl-4-hydroxyphenylessigsäure, Amide of β-(3,5-Di-tert-butyl-4-hydroxyphenyl)-propionsäure, geeignete Thiosynergisten, sekundäre Antioxidantien, Phosphite und Phosphonite, Benzofuranone und Indolinone.

Bevorzugt sind organische Phosphine (z.B. Triphenylphosphin), Phosphite (Irgafos 168), Phosphonate und Phosphate (z.B. Triisooctylphosphat, TOF), meist solche, bei denen die organischen Reste völlig oder teilweise aus gegebenenfalls substituierten aromatischen Resten bestehen. Diese Additive werden bevorzugt in Mengen von 10 bis 2000 mg/kg bevorzugt in Mengen von 30 bis 800 mg/kg, besonders bevorzugt in Mengen von 50 bis 500 mg/kg bezogen auf das Gesamtgewicht der Zusammensetzung eingesetzt.

Speziell bei hell und niedrig pigmentierten Produkten kann der Einsatz von UV-Stabilisatoren sinnvoll sein. Als UV-Stabilisatoren sind folgende Produkte geeignet: 2-(2'-Hydroxyphenyl)-benzotriazole, 2-Hydroxybenzophenone, Ester von substituierten und unsubstituierten Benzoesäuren, Acrylate, sterisch gehinderte Amine, Oxamide sowie 2-(Hydroxyphenyl)-1,3,5-triazine bzw. substituierte Hydroxyalkoxyphenyl, 1,3,5-triazole, bevorzugt sind substituierte Benzotriazole wie z.B. 2-(2'-hydroxy-5'-methyl-phenyl)-benzotriazol, 2-(2'-hydroxy-3',5'-di-t-butyl-phenyl)-benzotriazol, 2-(2'-hydroxy-3'-tert.-butyl-5'-methyl-phenyl)-5-chlorobenzotriazol, 2-(2'-hydroxy-3',5'-tert.-butyl-phenyl)-5-chlorobenzotriazol, 2-(2'-hydroxy-5'-tert.-octylphenyl)-benzotriazol, 2-(2'-hydroxy-3',5'-di-tert.-amylphenyl)-benzotriazol, 2-[2'-hydroxy-3'-(3",4",5",6"-tetrahydrophthalimido-ethyl)-5'-methylphenyl]-benzotriazol und 2,2'-methylenebis [4-(1,1,3,3-tetramethylbutyl)-6-(2H-benzotriazol-2-yl)-phenol].

Als UV-Stabilisatoren sind weiterhin solche geeignet, die ausgewählt sind aus der Gruppe umfassend Benzotriazole (z. B. Tinuvine der Fa. Ciba), Triazin CGX-06 der Fa. Ciba), Benzophenone (Uvinule der Fa. BASF), Cyanacrylate (Uvinule der Fa. BASF), Zimtsäureester und Oxalanilide sowie Mischungen dieser UV-Stabilisatoren.

Besonders bevorzugte UV-Stabilisatoren für die erfindungsgemäßen Formmassen sind Verbindungen aus der Gruppe, die aus den Benzotriazolen und dimeren Benzotriazolen, den Malonestern und den Cyanacrylaten sowie Mischungen dieser Verbindungen besteht.

Die UV-Stabilisatoren werden eingesetzt in Mengen von 0,01 Gew.-% bis 2,0 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Die Vorrichtung zur Herstellung der oben genannten erfindungsgemäßen Polymermischungen, ist dadurch gekennzeichnet, dass diese Vorrichtung aus einem gleichsinnig rotierenden Zwei- oder Mehrwellenextruder besteht. Dabei ist der Besatz der Extruderwellen dadurch gekennzeichnet, dass zumindest ab der Plastifizierzone des Extruders und den sich daran anschließenden Zonen in Förderrichtung bis zum Polymerschmelzeaustrag an der Düsenplatte das Verhältnis zwischen Schneckenaußendurchmesser und Gehäuseinnendurchmesser größer oder gleich 96,4 % bis

kleiner 98,4%, bevorzugt 98,2% ist. Die Summe aus Schneckenaußendurchmesser und Schneckenkerndurchmesser dividiert durch den doppelten Achsabstand ist größer oder gleich 97,9 % bis kleiner 99,1%. Daraus ergeben sich im Vergleich zum Stand der Technik, der z.B. in DE 10 2004 010 553 A1 beschrieben wird, angepasste Spalte zwischen Schneckenaußendurchmesser und Gehäusewandung sowie zwischen Schneckenkamm und Schneckengrund der gegenüberliegenden Schnecke. Erfindungsgemäß muss ein Längenanteil von mindestens 50 % der Schnecke im Bereich ab der Plastifizierzone des Extruders und den sich daran anschließenden Zonen in Förderrichtung bis zum Polymerschmelzeaustrag an der Düsenplatte in dem angegebenen Bereich für das Verhältnis zwischen Schneckenaußendurchmesser und Gehäuseinnendurchmesser und zusätzlich in dem angegebenen Bereich für die Summe aus Schneckenaußendurchmesser und Schneckenkerndurchmesser dividiert durch den doppelten Achsabstand liegen. Bevorzugt liegt ein Längenanteil von wenigstens 75 % und besonders bevorzugt ein Längenanteil von wenigstens 90 % der Schnecke bezogen auf das, dem jeweiligen Schneckenelement zugehörige Gehäuse in diesen Bereichen.

In einer bevorzugten Ausführungsform befinden sich im Bereich ab der Plastifizierzone und den sich daran anschließenden Zonen in Förderrichtung bis zum Polymerschmelzeaustrag an der Düsenplatte wenigstens ein Förderelement und wenigstens ein Knetelement, die die oben genannten Verhältnisse zwischen Schneckenaußendurchmesser und Gehäuseinnendurchmesser und Summe aus Schneckenaußendurchmesser und Schneckenkerndurchmesser dividiert durch den doppelten Achsabstand aufweisen. In diesem Zusammenhang können sowohl wenigstens ein Förderelement als auch wenigstens ein Knetelement die oben genannten Verhältnisse aufweisen. Bevorzugt weisen sowohl wenigstens ein Förderelement als auch wenigstens ein Knetelement die oben genannten Verhältnisse auf.

Aus dem Verhältnis zwischen Schneckenaußendurchmesser und Gehäuseinnendurchmesser können Spaltbreiten zwischen Schneckenkamm und Extruder-Gehäusewandung (d1 in Fig. 1) nach, dem Fachmann bekannten Beziehungen, berechnet werden.

Aus den beschriebenen Angaben und bei Kenntnis des Achsabstandes der beidem Wellen kann der Fachmann den Spalt zwischen dem Außendurchmesser der einen Schnecke und dem Kerndurchmesser der anderen Schnecke (d2 in Fig. 1) bestimmen.

Schneckenaußendurchmesser (Da in Fig. 2) und Schneckenkerndurchmesser (Di in Fig. 2) werden mittels Messschieber an den beiden Stirnflächen am Anfang und am Ende jedes Schneckenelements bestimmt (Da_Anfang und Da_Ende und Di_Anfang und Di_Ende in Fig. 2). Die beiden Werte Da_Anfang und Da_Ende werden gemittelt. Der so bestimmte Mittelwert wird als Außendurchmesser des Schneckenelements bezeichnet. Die beiden Werte Di_Anfang und Di_Ende werden gemittelt. Der so bestimmte Mittelwert wird als Kerndurchmesser des Schneckenelements bezeichnet.

Für eingängige Förder- und Knetelemente ergibt sich abweichend folgende Messvorschrift zur Bestimmung des Schneckenaußendurchmessers und des Schneckenkerndurchmessers (siehe Fig. 3): Von dem eingängigen Element werden der (Zahngrund-)Durchmesser Dk der Innenverzahnung und weiterhin der Abstand Dm der Innenverzahnung zum Schneckenkamm an der Stirnseite des Elements bestimmt. Der Außendurchmesser Da des eingängigen Schneckenelements ergibt sich zu

$$\text{Da (Eingänger)} = 2 \text{ x } (\text{Dk}/2 + \text{Dm}).$$

Zur Bestimmung des Kerndurchmessers Di werden der (Zahngrund-)Durchmesser Dk der Innenverzahnung und weiterhin der Abstand Dn der Innenverzahnung zum Schneckengrund an der Stirnseite des Elements bestimmt. Der Kerndurchmesser ergibt sich zu

$$\text{Di (Eingänger)} = 2 \text{ x } (\text{Dk}/2 + \text{Dn}).$$

Für exzentrische dreigängige Knetelemente ergibt sich abweichend folgende Messvorschrift zur Bestimmung des Schneckenaußendurchmessers und des Schneckenkerndurchmessers (siehe Fig. 4): Von dem dreigängigen Elementwerden der (Zahnstirn-)Durchmesser Dk der Innenverzahnung und weiterhin der Abstand Dm der Innenverzahnung zu dem Schneckenkamm, welcher das Gehäuse abreinigt, an der Stirnseite des Elements bestimmt. Der Außendurchmesser Da des dreigängigen Schneckenelements ergibt sich zu

$$\text{Da (Exz. Dreigänger)} = 2 \text{ x } (\text{Dk}/2 + \text{Dm}).$$

Zur Bestimmung des Kerndurchmessers Di werden der (Zahnstirn-)DurchmesserDk der Innenverzahnung und weiterhin der Abstand Dn der Innenverzahnung zu dem Schneckengrund, der dem Schneckenkamm, welcher das Gehäuse abreinigt, gegenüberliegt, an der Stirnseite des Elements bestimmt. Der Kerndurchmesser ergibt sich zu

$$\text{Di (Exz. Dreigänger)} = 2 \text{ x } (\text{Dk}/2 + \text{Dn}).$$

Dk, Dm und Dn (siehe Fig. 3 fürein eingängiges Elementbzw. Fig. 4 für ein exzentrisches dreigängiges Element) werden mittels Messschieber an den beiden Stirnflächen am Anfang und am Ende jedes Schneckenelements gemessen und daraus jeweils die Werte Da (Eingänger bzw. exzentrischer Dreigänger) und Di (Eingänger bzw. exzentrischer Dreigänger) für den Anfang und das Ende des Schneckenelements berechnet. Die beiden Werte Da_Anfang und Da_Ende werden gemittelt. Der so bestimmte Mittelwert wird als Außendurchmesser des Schneckenelements bezeichnet. Die beiden Werte Di_Anfang und Di_Ende werden gemittelt. Der so bestimmte Mittelwert wird als Kerndurchmesser des Schneckenelements bezeichnet.

An jedem Gehäuse wird der Gehäuseinnendurchmesser der linken und der rechten Bohrung jeweils an 3 um 45° versetzten Positionen (Dg1_links, Dg2_links, Dg3_links, Dg1_rechts, Dg2_rechts, Dg3_rechts in Fig. 5) am Gehäuseumfang mittels Messschieber gemessen, jeweils direkt am Anfang (Dg_Anfang in Fig. 6) und direkt am Ende des Gehäuses (Dg_Ende in Fig. 6) entsprechend für die rechte und für die linke Welle. Für jedes Gehäuse wird aus den sechs Werten Dg_Anfang (Dg1_links, Dg2_links, Dg3_links, Dg1_rechts, Dg2_rechts und Dg3_rechts in Fig. 3) und den sechs Werten Dg_Ende (Dg1_links, Dg2_links, Dg3_links, Dg1_rechts, Dg2_rechts und Dg3_rechts in Fig. 5) der arithmetische Mittelwert gebildet. Dieser Mittelwert wird als Gehäuseinnendurchmesser bezeichnet.

Aus dem Verhältnis zwischen Schneckenaußendurchmesser und Gehäuseinnendurchmesser können Spaltbreiten zwischen Schneckenkamm und Extruder-Gehäusewandung (d1 in Fig. 1) nach, dem Fachmann bekannten Beziehungen, berechnet werden.

Aus den beschriebenen Angaben und bei Kenntnis des Achsabstandes der beidem Wellen kann der Fachmann den Spalt zwischen dem Außendurchmesser der einen Schnecke und dem Kerndurchmesser der anderen Schnecke (d2 in Fig. 1) bestimmen.

Damit sind die erfindungsgemäßen Spaltbreiten deutlich anders ausgestaltet, als es dem Stand der Technik entspricht, wie er z.B. in DE 10 2004 010 553 A1 beschrieben wird.

Geeignete Extruder haben ein Verhältnis zwischen der Länge der Extruderschnecke und dem Durchmesser der Extruderschnecke, das im Bereich von 20 bis 50 liegt und einen Durchmesser der Gehäusebohrungen von 18 mm bis 180 mm. Die Schneckenelemente in der Plastifizierzone, Schmelzeförderzone und Mischzone des Zweiwellenextruders sind Förderelemente, Knetelemente und Mischelemente. Mischelemente sind z.B. Zahnmischelemente; sie werden beispielhaft in dem Buch "Der gleichläufige Doppelschneckenextruder" von Klemens Kohlgrüber, ISBN 978-3-446-41252-1 beschrieben (Kapitel 12.3.4). Knetelemente sind z.B. Knetscheiben mit verschiedenen Versatzwinkeln zwischen den Scheiben und verschiedenen Scheibenbreiten; sie werden beispielhaft in dem Buch "Der gleichläufige Doppelschneckenextruder" von Klemens Kohlgrüber, ISBN 978-3-446-41252-1 beschrieben (Kapitel 12.3.2). Die Förderelemente sind z.B. eingängige, zweigängige oder dreigängige dichtkämmende Gewindeelemente mit verschiedenen Gangsteigungen und Gangtiefen; sie werden beispielhaft in dem Buch "Der gleichläufige Doppelschneckenextruder" von Klemens Kohlgrüber, ISBN 978-3-446-41252-1 beschrieben (Kapitel 12.3.1).

Geeignete Zwei- oder Mehrwellenextruder weisen als geeignete Dosierstellen für die in dem Extruder zu vermischenden Stoffe mindestens einen, ggf. auch mehrere Einfülltrichter an mindestens einem der Extrudergehäuse vor der Plastifizierzone auf. Anstelle eines Einfülltrichters können auch beliebige Gehäuseöffnungen für beliebige Fördereinrichtungen an mindestens einem der Extrudergehäuse vor der Plastifizierzone vorhanden sein. Die zu vermischenden Stoffe können entweder gemeinsam oder getrennt an einer oder mehreren Dosierstellen in den Extruder eingeführt werden. Sie können, ebenso wie die Pigmente, als Pulvermischungen in einer der anderen als Pulver vorliegenden Komponenten der Polymermischung in den Zweiwellenextruder dosiert werden. Vorzugsweise werden alle Komponenten gemeinsam über einen Trichter am ersten Extrudergehäuse - in Förderrichtung gesehen - ggf. über mehrere Waagen (Granulat 1, Granulat 2, Premix) dosiert.

Die Drehzahlen der Extruderwellen können in einem weiten Bereich von 50 bis 1200 $min^{-1}$ variieren, bevorzugt sind Drehzahlen im Bereich von 100 bis 700 $min^{-1}$, um den Energie-Eintrag in die Polymerschmelze und damit deren Temperatur-Erhöhung zu begrenzen.

Weiterer Gegenstand der Erfindung ist ein Verfahren zur Herstellung der erfindungsgemäßen Polymermischungen unter Verwendung der oben beschriebenen Vorrichtung, wobei die Komponenten vorzugsweise in einem einzigen Aufschmelzschritt ohne die Verwendung von bereits in der Schmelze vorgemischten Pigment-Masterbatches, und bei möglichst geringem Energieeintrag miteinander gemischt werden.

Die Dosierung der Mischungsbestandteile erfolgt an geeigneten Dosierstellen über mindestens einen, ggf. auch mehrere Einfülltrichter an mindestens einem der Extrudergehäuse vor der Plastifizierzone. Anstelle eines Einfülltrichters können auch beliebige Gehäuseöffnungen für beliebige Fördereinrichtungen an mindestens einem der Extrudergehäuse vor der Plastifizierzone genutzt werden. Die zu vermischenden Stoffe können entweder gemeinsam oder getrennt an einer oder mehreren Dosierstellen in den Extruder eingeführt werden. Sie können, ebenso wie das Pigment, bevorzugt Ruß, als Pulvermischungen in einer der anderen als Pulver vorliegenden Komponenten der Polymermischung in den Zweiwellenextruder dosiert werden. Vorzugsweise werden alle Komponenten gemeinsam über einen Trichter am ersten Extrudergehäuse - in Förderrichtung gesehen - ggf. über mehrere Waagen (Granulat 1, Granulat 2, Premix) dosiert.

Die Drehzahlen der Extruderwellen können in einem weiten Bereich von 50 bis 1200 $min^{-1}$ variieren, bevorzugt

sind Drehzahlen im Bereich von 100 bis 700 $min^{-1}$, um den Energie-Eintrag in die Polymerschmelze und damit deren Temperatur-Erhöhung zu begrenzen. Die Drehzahlen und die Durchsätze werden vorzugsweise so eingestellt, dass die Polymerschmelze-Temperatur am Austritt der Extruderdüse nicht höher als 320°C ist, vorzugsweise kleiner 300°C und besonders bevorzugt kleiner 290°C ist.

Die erfindungsgemäß hergestellten Polymermischungen können durch thermoplastische Verarbeitung in der Schmelze zu Formkörpern oder Extrudaten auf üblichen Apparaten verarbeitet werden. Bevorzugt ist die Herstellung von Formkörpern durch Spritzgussverarbeitung und durch Extrusion.

Eventuell auftretende Defekte auf Glanz-Oberflächen von so hergestellten Spritzgusskörpern, welche auf Spritzgusswerkzeugen mitGlanzpolitur (ISO N1) erzeugt werden,können durch optische Analysenmethoden identifiziert und quantifiziert werden, wobei alle Störstellen mit einem mittleren Durchmesser von wenigstens 10 μm für die Bestimmung der Anzahl der Oberflächendefekte herangezogen werden. Eine geeignete Messmethode zur quantitativen Erfassung der Oberflächendefekte ist die Betrachtung der Formteiloberflächen in einem Auflichtmikroskop - z.B. Zeiss Axioplan 2 motorisiert - durch ein Objektiv mit 2,5-facher Vergrößerung im Hellfeld, bei einer Beleuchtung mit einer Halogen-100-Lichtquelle. Dabei wurde die Anzahl der Fehlstellen in einem Oberflächenbereich der Größe von 4 cm x 4 cm durch mäanderförmiges Scannen dieser Fläche bestimmt. Diese Bestimmung wurde durch eine Kamera - z.B. Axiocam HRC - mit einer Bildauswertesoftware - z.B. KS 300 Zeiss - unterstützt

Die optisch so festgestellten Oberflächendefekte auf Formteilen aus Polymermischungen mit den oben genannten Zusammensetzungen werden durch Agglomerate und Aggregate aus Pigmenten, insbesondere Rußteilchen, die bei der Schmelzemischung der Komponenten im Extruder unzureichend zerteilt werden, erzeugt. Oberflächendefekte können auch durch Elastomere oder eine Kombination aus Elastomeren und Pigmentpartikeln entstehen. Durch Auflichtmikroskopie an geeigneten Anschnitten der Materialproben werden solche Oberflächendefekte deutlich sichtbar. Üblicherweise haben solche Oberflächendefekte mittlere Durchmesser von ca. 10 μm bis ca. 300 μm (siehe Fig. 7). Durch Raman-Spektroskopie lässt sich die Identität der Teilchen als Kohlenstoff nachweisen (siehe Fig. 8). Das Höhenprofil eines Oberflächendefekts wird durch CLSM Topographie ermittelt. Für diese Messung wurde ein Mikroskop mit der Bezeichnung Leica TCS NT mit einem Objektiv 40x NA 0,55 verwendet. Die Wellenlänge des eingesetzten Lasers beträgt 488 nm. Für die Messung wurden 63 Schnitte bei einer Gesamtschnitttiefe von 12,6 μm gemessen. Die Auswertung wurde mittels der Software "Topo" mit Profilmessung durchgeführt. Die Ausdehnung eines typischen Oberflächendefekts in die Tiefe zeigt Fig. 9.

Die Anzahl der Oberflächendefekte auf Formkörpern aus erfindungsgemäß auf gleichsinnig rotierenden selbst reinigenden Zweiwellenextrudern hergestellten Polymermischungen wird signifikant reduziert im Vergleich zu Oberflächendefekten auf Formkörpern von Polymerschmelzemischungen, die mit gleicher Extruderwellen-Konfiguration, aber üblicher enger Spaltbreite über der gesamten Länge der Extruderwellen hergestellt wurden. Neben der verbesserten Zerteilung (Dispergierung) von Pigmentagglomeraten und -aggregaten und der verbesserten Verteilung der Pigmentpartikel sowie der enthaltenen Elastomere führt die erfindungsgemäße Vergrößerung der Spalte auf der einen Seite bei etwas niedrigerem Energieeintrag zu einer deutlichen Verbesserung der Oberflächenqualität. Auf der anderen Seite kann bei gleichbleibender Oberflächenqualität der Energieeintrag deutlich gesenkt und das Produkt wesentlich schonender compoundiert werden.

Die erfindungsgemäß hergestellten Polymermischungen werden vorzugsweise zur Herstellung von Spritzgussformkörpern oder von Extrudaten verwendet, bei denen besondere Anforderungen an die Homogenität und Defektfreiheit der Oberflächen gestellt werden.

Beispiele der erfindungsgemäßen Formkörper sind Profile, Folien, Gehäuseteile jeder Art, insbesondere Gehäuseteile für Computer, Laptops, Handys, Fernseherrahmen; für Büromaschinen wie Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden. Weitere Formkörper sind Lebensmittel- und Getränkeverpackungen und Bauteile, die nach dem Spritzguss galvanisiert oder metallisiert werden

Fig. 1: Bezeichnung der Spalte im Doppelschneckenextruder.

Fig. 2: Messstellen für die Bestimmung des Schnecken-Außendurchmessers Da und des Schnecken-Innendurchmessers Di

- links: Querschnitt eines Schneckenelements;
- rechts oben: Seitenansicht eines Schneckenelements;
- rechts unten: Seitenansicht eines Schneckenelements, das um 90° verdreht ist im Vergleich zu dem Schneckenelement rechts oben

Fig. 3: Messstellen zur Bestimmung des Schneckenaußendurchmessers und des Schneckeninnendurchmessers eines eingängigen Elements oder Knetblocks

Fig. 4: Messstellen zur Bestimmung des Schneckenaußendurchmessers und des Schneckeninnendurchmessers eines dreigängigen Elements oder Knetblocks
Fig. 5: Messstellen für die Bestimmung des Gehäuse-Innendurchmessers
Fig. 6: Messstellen für die Bestimmung des Gehäuse-Innendurchmessers
Fig. 7: Lichtmikroskopische Aufnahme eines Rußagglomerats bei Oberflächendefekten.
Fig. 8: Raman-Spektroskopie eines Rußagglomerats.
Fig. 9: Untersuchung der Ausdehnung eines Rußagglomerats in die Tiefe mittels CLSM.
Fig. 10: Extruderaufbau.
Fig. 11: Anzahl der Oberflächendefekte in Abhängigkeit von der Schmelzetemperatur bei verschiedenen Spaltgrößen.
Fig. 12: Simulationsrechnung zur Bestimmung der lokalen Temperaturspitzen im Spalt bei verschiedenen Spaltgrößen.
Fig.13: Extruderaufbau.

Die nachfolgenden Beispiele sollen die Erfindung erläutern, ohne sie aber auf den Inhalt der Beispiele einzuschränken.

## Beispiele

Die in den Beispielen 1-15 beschriebenen Versuche wurden mit einem Doppelschneckenextruder Evolum HT32 der Firma Clextral durchgeführt. Der verwendete Doppelschneckenextruder besitzt einen Gehäuseinnendurchmesser von 32 mm und ein Länge-zu-Durchmesser-Verhältnis von 36. Den prinzipiellen Aufbau des verwendeten Extruders zeigt Fig. 10. Der Doppelschneckenextruder weist ein aus 9 Teilen bestehendes Gehäuse auf, in welchem 2 gleichsinnig drehende, miteinander kämmende Wellen (nicht gezeigt) angeordnet sind.
Die Dosierung aller Komponenten erfolgte über den Haupteinzug in Gehäuse 5 an der abgebildeten Einzugsöffnung 4. In Gehäuseteil 12 befindet sich die Entgasungsöffnung 14, welche an eine Absaugvorrichtung (nicht gezeigt) angeschlossen ist.
Im Bereich der Gehäuse 5 bis 9 befinden sich Förderzonen für das Granulat.
Im Bereich der Gehäuse 10 und 11 befindet sich eine Plastifizierzone, welche aus verschiedenen zwei- und dreigängigen Knetblöcken verschiedener Breite und Abstauelementen besteht.
Im Bereich der Gehäuse 11 und 12 befindet sich eine Mischzone, welche aus verschiedenen Misch- und Förderelementen besteht.
In Gehäuse 13 befindet sich die Druckaufbauzone und im Anschluss daran eine Düsenplatte mit 6 Löchern.
Einen Querschnitt durch den verwendeten Extruder zeigt Fig. 1. Das Extrudergehäuse wird mit 1 bezeichnet. Im Gehäuse-Inneren befinden sich zwei gleichsinnig drehende, miteinander kämmende Wellen. Die rechte Welle wird mit 2 und die linke Welle mit 3 bezeichnet. Der Spalt zwischen Gehäuse-Innenwand und Welle wird als d1 bezeichnet. Der Spalt zwischen den beiden Wellen entspricht d2. Bei allen Versuchen wurde ein Drehmoment von 80 % (273 Nm) eingestellt.
Polycarbonatpulver, Ruß und alle anderen Additive wurden in einem Mischer der Firma Mixaco vorgemischt.
Die Granulierung erfolgte als Stranggranulierung nach Wasserbadkühlung.
Die Messung der Schmelzetemperatur erfolgte mittels Einstechen eines Thermoelements in die austretende Schmelze des, von außen gesehen, dritten Schmelzestrangs direkt vor der Düse.
Der spezifische Energieeintrag wurde nach Gleichung 1 ermittelt.

$$E_{spez} = \frac{2 \cdot \pi \cdot M \cdot n}{\dot{m} \cdot 60000} \qquad \text{Gl.1}$$

$E_{spez}$ : spezifischer Energieeintrag in kWh/kg

M: Drehmoment in Nm

n: Drehzahl in 1/min

$\dot{m}$ : Durchsatz in kg/h

Die in den Beispielen 17-24 beschriebenen Versuche wurden mit einem Doppelschneckenextruder ZSK 32 MC der Firma Coperion durchgeführt. Der verwendete Doppelschneckenextruder besitzt einen Gehäuseinnendurchmesser von 32,0 mm und ein Länge-zu-Durchmesser-Verhältnis von 43,3. Den prinzipiellen Aufbau des verwendeten Extruders

zeigt Fig. 13. Der Doppelschneckenextruder weist ein aus 11 Teilen bestehendes Gehäuse auf, in welchem 2 gleichsinnig drehende, miteinander kämmende Wellen (nicht gezeigt) angeordnet sind.

Die Dosierung aller Komponenten erfolgte über den Haupteinzug in Gehäuse 5 an der abgebildeten Einzugsöffnung 4. In Gehäuseteil 15 befindet sich die Entgasungsöffnung 14, welche an eine Absaugvorrichtung (nicht gezeigt) angeschlossen ist.

Im Bereich der Gehäuse 5 bis 11 befinden sich Förderzonen für das Granulat.

Im Bereich der Gehäuse 11 bis 13 befindet sich eine Plastifizierzone, welche aus verschiedenen zwei- und dreigängigen Knetblöcken verschiedener Breite und Abstauelementen besteht.

Im Bereich des Gehäuses 13 befindet sich eine Mischzone, welche aus verschiedenen Misch- und Förderelementen besteht.

In Gehäuse 16 befindet sich die Druckaufbauzone und im Anschluss daran eine Düsenplatte mit 4 Löchern.

Einen Querschnitt durch den verwendeten Extruder zeigt Fig. 1. Das Extrudergehäuse wird mit 1 bezeichnet. Im Gehäuse-Inneren befinden sich zwei gleichsinnig drehende, miteinander kämmende Wellen. Die rechte Welle wird mit 2 und die linke Welle mit 3 bezeichnet. Der Spalt zwischen Gehäuse-Innenwand und Welle wird als d1 bezeichnet. Der Spalt zwischen den beiden Wellen entspricht d2. Bei allen Versuchen wurde ein Drehmoment von 85 % (323 Nm) eingestellt.

Polycarbonatpulver, Ruß und alle anderen Additive wurden in einem Mischer der Firma Mixaco vorgemischt.

Die Granulierung erfolgte als Stranggranulierung nach Wasserbadkühlung.

Die Messung der Schmelzetemperatur erfolgte mittels eines Temperturfühlers Gneuss TF-CX (FeCuNi).

Der spezifische Energieeintrag wurde nach Gleichung 1 ermittelt.

Das in den Versuchen 1-15 und in den Versuchen 17 - 24 hergestellte Compound wurde im Anschluss über ein Spritzgussverfahren zu Platten mit glänzender Oberfläche verarbeitet.

Die Formkörper wurden durch Spritzgussverarbeitung auf einer Spritzgussmaschine des Typs FM160 von der Firma Klöckner hergestellt. Diese Spritzgussmaschine besitzt einen Zylinderdurchmesser von 45 mm. Dazu wurden die Polymermischungen bei 110 °C innerhalb von 4 Stunden vorgetrocknet. Die Spritzgussverarbeitung erfolgte unter den für Polycarbonate charakteristischen Bedingungen. Bei der Herstellung von Platten einer Größe von 150 mm x 105 mm x 3,2 mm lagen die Masse- oder Schmelzetemperaturen bei 260°C, die Werkzeugtemperatur bei 80°C, die Zykluszeit bei 43 sec, die Einspritzgeschwindigkeit bei 40 mm/sec und der Staudruck bei 150 bar. Für die Herstellung der Platten wurde ein Spritzgusswerkzeug mit Glanzpolitur (ISO N1) verwendet.

Auftretende Defekte auf den Oberflächen von so hergestellten Spritzgusskörpern wurden durch optische Analysenmethoden identifiziert und quantifiziert. Eine geeignete Messmethode zur quantitativen Erfassung der Oberflächendefekte ist die Betrachtung der Formteiloberflächen in einem Auflichtmikroskop - z.B. Zeiss Axioplan 2 motorisiert - durch ein Objektiv mit 2,5-facher Vergrößerung im Hellfeld, bei einer Beleuchtung mit einer Halogen-100-Lichtquelle. Dabei wurde ein Oberflächenbereich der Größe von 4 cm x 4 cm durch mäanderförmiges Scannen betrachtet und es wurden mit einer CCD-Kamera - z.B. Axiocam HRC - Fotos von dieser Oberfläche erzeugt. Mit einer Bildauswertesoftware - z.B. KS 300 Zeiss - wurde bei den Fotos die Anzahl und Größe der Oberflächendefekte bestimmt. Alle Oberflächendefekte mit einer Größe von wenigstens 10 μm wurden für die Bestimmung der Anzahl der Oberflächendefekte herangezogen.

Die optisch so festgestellten Oberflächendefekte auf Formteilen aus Polymermischungen mit den oben genannten Zusammensetzungen werden insbesondere durch Agglomerate oder Aggregate von Rußteilchen verursacht, die bei der Schmelzemischung der Komponenten im Zweiwellenextruder unzureichend zerteilt werden. Oberflächendefekte können auch durch eine Kombination von Elastomeren und Pigmentpartikel oder nur aus Elastomeren bestehen. Durch lichtmikroskopische Aufnahmen an geeigneten Anschnitten der Materialproben werden solche Oberflächendefekte deutlich sichtbar. Üblicherweise haben solche Oberflächendefekte mittlere Durchmesser von ca. 10 μm bis ca. μm (siehe Fig. 7). Durch Raman-Spektroskopie lässt sich die Identität der Teilchen als Kohlenstoff nachweisen (siehe Fig. 8).

Die Prüfung der Kerbschlagzähigkeit erfolgte im Kerbschlagversuch nach Izod nach ISO 180/1A. Es wurden jeweils 10 Prüfkörper geprüft und aus diesen Ergebnissen der arithmetische Mittelwert bestimmt.

Die Zusammensetzung, die in den Extruder geführt wird, besteht aus einer Mischung aus:

Granulatmischung enthaltend 65,64 Gew.-Teile eines linearen Polycarbonats auf Basis von Bisphenol A mit einer relativen Viskosität $\eta_{rel}$ = 1,257 (gemessen in $CH_2Cl_2$ als Lösungsmittel bei 25°C und bei einer Konzentration von 0,5 g/100 ml), 6,82 Gew.-Teile Metablen SRK200 als Kautschuk, 17,54 Gew.-Teile eines Styrol-Acrylnitril-Copolymerisats aus 77 Gew.-% Styrol und 23 Gew.-% Acrylnitril mit einem gewichtsgemittelten Molekulargewicht $M_w$ von 130.000 g/mol (bestimmt durch GPC in Tetrahydrofuran mit Polystyrolstandard), hergestellt nach dem Masseverfahren.

Pulvermischung enthaltend 7,42 Gew.-Teile eines linearen Polycarbonats auf Basis von Bisphenol A mit einer relativen Viskosität $\eta_{rel}$ = 1,313 (gemessen in $CH_2Cl_2$ als Lösungsmittel bei 25°C und bei einer Konzentration von 0,5 g/100 ml), 0,97 Gew.-Teile Ruß und 1,61 Gew.-Teile Additive, wobei sich alle Gewichtsteile in der Zusammensetzung auf 100 addieren.

**Vergleichsbeispiele 13, 14 und 15**

Die Vergleichsbeispiele 13, 14 und 15 unterscheiden sich in der Drehzahl des Extruders, wobei bei Vergleichsbeispiel 13 die höchste und bei Vergleichsbeispiel 15 die niedrigste Drehzahl eingestellt wurde (siehe Tab. 1). Bei den Versuchen 13, 14 und 15 wurde ein Verhältnis von Schneckenaußendurchmesser zu Gehäuseinnendurchmesser gemessen, welches über die gesamte Verfahrensteillänge größer oder gleich 98,4 % war. Die Summe aus Schneckenaußendurchmesser und Schneckenkerndurchmesser dividiert durch den doppelten Achsabstand war größer oder gleich 99,1 %.

Bei einem Längenanteil von 0 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und Die Summe aus Schneckenaußendurchmesser und Schneckenkerndurchmesser dividiert durch den doppelten Achsabstand kleiner als 99,1 %. Somit entsprach 0 % der Verfahrensteillänge den erfindungsgemäß definierten Bedingungen. Die Beispiele liegen somit außerhalb des erfindungsgemäß beanspruchten Bereichs.

**Vergleichsbeispiele: 7, 8 und 9**

Die Vergleichsbeispiele 7, 8 und 9 unterscheiden sich in der Drehzahl des Extruders, wobei bei Vergleichsbeispiel 7 die höchste und bei Vergleichsbeispiel 9 die niedrigste Drehzahl eingestellt wurde (siehe Tab. 1). Bei den Versuchen 7, 8 und 9 wurden im Bereich der Austragszone erfindungsgemäß definierte Elemente eingesetzt. Die erfindungsgemäß eingesetzten Elemente bestehen nur aus Förderelementen. In den restlichen Bereichen des Verfahrensteils wurden jedoch Elemente eingesetzt, die ein Verhältnis von Schneckenaußendurchmesser zu Gehäuseinnendurchmesser, größer oder gleich 98,4 %, und weiterhin eine Summe aus Schneckenaußendurchmesser und Schneckenkerndurchmesser dividiert durch den doppelten Achsabstand größer oder gleich 99,1 % aufwiesen. Insbesondere wies keiner der Knetblöcke die erfindungsgemäßen Bedingungen auf.

Bei einem Längenanteil von 30 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und die Summe aus Schneckenaußendurchmesser und Schneckenkerndurchmesser dividiert durch den doppelten Achsabstand kleiner als 99,1 %. Somit entsprach 30 % der Verfahrensteillänge den erfindungsgemäß definierten Bedingungen. Die Beispiele liegen somit außerhalb des erfindungsgemäß beanspruchten Bereichs.

Die Vergleichsbeispiele 7 bis 9 zeigen, dass die Verringerung des Verhältnisses zwischen Schneckenaußendurchmesser und Gehäuseinnendurchmesser sowie der Summe aus Schneckenaußendurchmesser und Schneckenkerndurchmesser dividiert durch den doppelten Achsabstand nur in der Austragszone allein nicht den gewünschten Effekt auf die Oberflächeneigenschaften hat.

**Vergleichsbeispiele 10 und 11**

Die Vergleichsbeispiele 10 und 11 unterscheiden sich in der Drehzahl des Extruders, wobei bei Vergleichsbeispiel 10 die höchste und bei Vergleichsbeispiel 11 die niedrigste Drehzahl eingestellt wurde (siehe Tab. 1). Bei den Versuchen 10 und 11 wurden im Bereich der Plastifizierzone erfindungsgemäß definierte Elemente eingesetzt. Sowohl Knetblöcke als auch Förder- und Mischelemente wiesen die erfindungsgemäßen Bedingungen auf. In den restlichen Bereichen des Verfahrensteils wurden jedoch Elemente eingesetzt, die ein Verhältnis von Schneckenaußendurchmesser zu Gehäuseinnendurchmesser, größer oder gleich 98,4 %, und weiterhin eine Summe aus Schneckenaußendurchmesser und Schneckenkerndurchmesser dividiert durch den doppelten Achsabstand größer oder gleich 99,1 % aufwiesen.

Bei einem Längenanteil von 41 % des beanspruchten Bereichs ab der Plastifizierzone bis zur Düsenplatte war das Verhältnis zwischen Schneckenaußendurchmesser und zugehörigem Gehäuseinnendurchmesser kleiner 98,4 % und die Summe aus Schneckenaußendurchmesser und Schneckenkerndurchmesser dividiert durch den doppelten Achsabstand kleiner 99,1 %. Somit entsprach 41 % der Verfahrensteillänge den erfindungsgemäß definierten Bedingungen. Die Beispiele liegen somit außerhalb des erfindungsgemäß beanspruchten Bereichs.

Verglichen mit den Vergleichsbeispielen 13-15 konnte in den Vergleichsbeispielen 10 und 11 keine Verbesserung der Oberflächenqualität erzielt werden.

**Beispiele 1, 2 und 3**

Die Beispiele 1, 2 und 3 unterscheiden sich in der Drehzahl des Extruders, wobei bei Beispiel 1 die höchste und bei Beispiel 3 die niedrigste Drehzahl eingestellt wurde (siehe Tab. 1). Bei den Versuchen 1, 2 und 3 wurden im Bereich ab der Plastifizierzone bis zur Düsenplatte angepasste Elemente eingesetzt. Sowohl Knetblöcke als auch Förder- und Mischelemente wiesen die angepasste Bedingungen auf. In der Feststoffförderzone wurden jedoch Elemente eingesetzt,

die ein Verhältnis von Schneckenaußendurchmesser zu Gehäuseinnendurchmesser, größer oder gleich 98,4 %, und weiterhin eine Summe aus Schneckenaußendurchmesser und Schneckenkerndurchmesser dividiert durch den doppelten Achsabstand größer oder gleich 99,1 % aufwiesen.

Bei einem Längenanteil von 77 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und eine Summe aus Schneckenaußendurchmesser und Schneckenkerndurchmesser dividiert durch den doppelten Achsabstand kleiner als 99,1 %.

Der Vergleich der Beispiele 1 bis 3 mit den nicht erfindungsgemäßen Vergleichsbeispielen 7 bis 9 und 13 bis 15 zeigt die deutliche Verringerung der Oberflächendefekte und eine deutliche Erhöhung der Schlagzähigkeit bei den Beispielen 1 bis 3.

**Beispiele 4, 5 und 6**

Die Beispiele 4, 5 und 6 unterscheiden sich in der Drehzahl des Extruders, wobei bei Beispiel 4 die höchste und bei Beispiel 6 die niedrigste Drehzahl eingestellt wurde (siehe Tab. 1). Bei den Versuchen 4,5 und 6 wurden im kompletten Verfahrensbereich Elemente eingesetzt, die ein Verhältnis von Schneckenaußendurchmesser zu Gehäuseinnendurchmesser, kleiner als 98,4 %, und weiterhin eine Summe aus Schneckenaußendurchmesser und Schneckenkerndurchmesser dividiert durch den doppelten Achsabstand kleiner als 99,1 % aufwiesen. Sowohl Knetblöcke als auch Förder- und Mischelemente wiesen die Bedingungen auf.

Bei einem Längenanteil von 77 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und die Summe aus Schneckenaußendurchmesser und Schneckenkerndurchmesser dividiert durch den doppelten Achsabstand kleiner als 99,1 %.

Der Vergleich der Beispiele 4 bis 6 mit den nicht erfindungsgemäßen Vergleichsbeispielen 7 bis 9 und 13 bis 15 zeigt die deutliche Verringerung der Oberflächendefekte und eine deutliche Erhöhung der Schlagzähigkeit bei den Beispielen 4 bis 6, wenn gleiche Verfahrensparameter verwendet werden.

Wurden stattdessen die Verfahrensparameter so gewählt, dass gleiche Oberflächenqualitäten erreicht wurden, so konnten in den Beispielen 4 bis 6 durch den Einsatz von Elementen mit einem angepassten Verhältnis zwischen dem Schneckenaußendurchmesser und dem Gehäuseinnendurchmesser und zwischen Schneckenaußendurchmesser und Schneckenkerndurchmesser im angepassten Bereich im Vergleich zu den Vergleichsbeispielen 13 bis 15 die Schmelzetemperaturen reduziert werden, wie in Fig. 11 gezeigt wird. Bei gleicher Oberflächenqualität konnten durch Einsatz des angepassten Verfahrens im Beispiel die Schmelzetemperaturen um 22 °C reduziert werden.

**Beispiel 16**

Die Berechnung durch CFD-Simulation zeigt, dass durch das erfindungsgemäße Verfahren lokale Temperaturspitzen in den Spalten reduziert werden. Die lokalen Temperaturspitzen im Spalt zeigt Fig. 12.

Gegenüber den Spaltgrößen wie im Stand der Technik bekannt, zeigt sich bei den angepassten Spalten eine Verringerung der lokalen Temperaturspitzen. Die lokalen Temperaturspitzen nehmen umso stärker ab, je größer die Spaltbreiten sind. Alle Verfahrensparameter mit Ausnahme der Schneckenspalte wurden für die Simulationsrechnung konstant gehalten. Die für die Simulationsrechnung verwendeten Verfahrensparameter entsprachen einer Drehzahl des Extruders von 500 1/min und einem Durchsatz von 100 kg/h. Die absoluten Temperaturwerte variieren mit den Verfahrensparametern.

**Vergleichsbeispiele 19 und 20**

Die Vergleichsbeispiele 19 und 20 unterscheiden sich in der Drehzahl des Extruders, wobei bei Vergleichsbeispiel 20 die höchste und bei Vergleichsbeispiel 19 die niedrigste Drehzahl eingestellt wurde (siehe Tab. 2). Bei den Versuchen 19 und 20 wurde ein Verhältnis von Schneckenaußendurchmesser zu Gehäuseinnendurchmesser gemessen, welches über die gesamte Verfahrensteillänge größer oder gleich 98,4 % war. Die Summe aus Schneckenaußendurchmesser und Schneckenkerndurchmesser dividiert durch den doppelten Achsabstand war größer oder gleich 99,1 %.

Bei einem Längenanteil von 0 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und Die Summe aus Schneckenaußendurchmesser und Schneckenkerndurchmesser dividiert durch den doppelten Achsabstand kleiner als 99,1 %.

Die Vergleichsbeispiele 21 und 22 unterscheiden sich in der Drehzahl des Extruders, wobei bei Vergleichsbeispiel 22 die höchste und bei Vergleichsbeispiel 21 die niedrigste Drehzahl eingestellt wurde (siehe Tab. 2). Bei den

Versuchen 21 und 22 wurden im Bereich der Plastifizierzone angepasste Elemente eingesetzt. Die angepassten Elemente bestehen nur aus Knetblöcken. In den restlichen Bereichen des Verfahrensteils wurden jedoch Elemente eingesetzt, die ein Verhältnis von Schneckenaußendurchmesser zu Gehäuseinnendurchmesser, größer oder gleich 98,4 %, und weiterhin eine Summe aus Schneckenaußendurchmesser und Schneckenkerndurchmesser dividiert durch den doppelten Achsabstand größer oder gleich 99,1 % aufwiesen. Insbesondere wies kein Förderelement die angepassten Bedingungen auf.

Bei einem Längenanteil von 26 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und Die Summe aus Schneckenaußendurchmesser und Schneckenkerndurchmesser dividiert durch den doppelten Achsabstand kleiner als 99,1 %. Somit entsprach 26 % der Verfahrensteillänge den angepassten Bedingungen.

Die Vergleichsbeispiele 21 und 22 zeigen, dass die Verringerung des Verhältnisses zwischen Schneckenaußendurchmesser und Gehäuseinnendurchmesser sowie der Summe aus Schneckenaußendurchmesser und Schneckenkerndurchmesser dividiert durch den doppelten Achsabstandnur in der Plastifizierzone allein nichtden gewünschten Effekt auf die Oberflächeneigenschaften hat.

**Vergleichsbeispiele 23 und 24**

Die Vergleichsbeispiele 23 und 24 unterscheiden sich in der Drehzahl des Extruders, wobei bei Vergleichsbeispiel 24 die höchste und bei Vergleichsbeispiel 23 die niedrigste Drehzahl eingestellt wurde (siehe Tab. 2). Bei den Versuchen 23 und 24 wurden im Bereich der Austragszone angepasste Elemente eingesetzt. Die angepassten Elemente bestehen nur aus Förderelementen. In den restlichen Bereichen des Verfahrensteils wurden jedoch Elemente eingesetzt, die ein Verhältnis von Schneckenaußendurchmesser zu Gehäuseinnendurchmesser, größer oder gleich 98,4 %, und weiterhin eine Summe aus Schneckenaußendurchmesser und Schneckenkerndurchmesser dividiert durch den doppelten Achsabstand größer oder gleich 99,1 % aufwiesen. Insbesondere wies keiner der Knetblöcke die angepassten Bedingungen auf.

Bei einem Längenanteil von 48 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und Die Summe aus Schneckenaußendurchmesser und Schneckenkerndurchmesser dividiert durch den doppelten Achsabstand kleiner als 99,1 %.

Die Vergleichsbeispiele 21 und 22 zeigen, dass die Verringerung des Verhältnisses zwischen Schneckenaußendurchmesser und Gehäuseinnendurchmesser sowie der Summe aus Schneckenaußendurchmesser und Schneckenkerndurchmesser dividiert durch den doppelten Achsabstand nur in der Austragszone allein nicht den gewünschten Effekt auf die Oberflächeneigenschaften hat.

Die Beispiele 17 und 18 unterscheiden sich in der Drehzahl des Extruders, wobei bei Beispiel 18 die höchste und bei Beispiel 17 die niedrigste Drehzahl eingestellt wurde (siehe Tab. 2). Bei den Versuchen 17 und 18 wurden im Bereich ab der Plastifizierzone bis zur Düsenplatte angepasste Elemente eingesetzt. Sowohl Knetblöcke als auch Förder- und Mischelemente wiesen die angepassten Bedingungen auf. In der Feststoffförderzone wurden jedoch Elemente eingesetzt, die ein Verhältnis von Schneckenaußendurchmesser zu Gehäuseinnendurchmesser, größer oder gleich 98,4 %, und weiterhin eine Summe aus Schneckenaußendurchmesser und Schneckenkerndurchmesser dividiert durch den doppelten Achsabstand größer oder gleich 99,1 % aufwiesen.

Bei einem Längenanteil von 74 % des beanspruchten Bereichs ab der Plastifizierzone bis zur Düsenplatte war das Verhältnis zwischen Schneckenaußendurchmesser und zugehörigem Gehäuseinnendurchmesser kleiner als 98,4 % und eine Summe aus Schneckenaußendurchmesser und Schneckenkerndurchmesser dividiert durch den doppelten Achsabstand kleiner als 99,1 %.

Der Vergleich der Beispiele 17 und 18 mit den nicht Vergleichsbeispielen 19 bis 24 zeigt die deutliche Verringerung der Oberflächendefekte bei den Beispielen 17 und 18.

Tab. 1:

| Beispiel | 1 | 2 | 3 | 4 | 5 | 6 | 7 | 8 | 9 | 10 | 11 | 13 | 14 | 15 |
|---|---|---|---|---|---|---|---|---|---|---|---|---|---|---|
| | | | | | | | Vergleich | | | Vergleich | | Vergleich | | |
| Längenanteil des bezeichneten Bereiches in welchem Elemente und Gehäuse die in den Beispielbeschreibungen genannten Bedingungen erfüllen in % | | | | | | | | | | | | | | |
| Bereich ab der Plastifizierzone bis zur Düsenplatte | 77 | 77 | 77 | 77 | 77 | 77 | 30 | 30 | 30 | 41 | 41 | 0 | 0 | 0 |
| | | | | | | | | | | | | | | |
| Durchsatz [kg/h] | 150 | 105 | 55 | 160 | 115 | 55 | 150 | 108 | 54 | 145 | 101 | 150 | 110 | 54 |
| | | | | | | | | | | | | | | |
| Drehzahl [min^-1] | 800 | 500 | 200 | 800 | 500 | 200 | 800 | 500 | 200 | 800 | 500 | 800 | 500 | 200 |
| | | | | | | | | | | | | | | |
| Energieeintrag [kWh/kg] | 0,15 | 0,14 | 0,10 | 0,14 | 0,12 | 0,10 | 0,15 | 0,13 | 0,11 | 0,16 | 0,14 | 0,15 | 0,13 | 0,11 |
| | | | | | | | | | | | | | | |
| Schmelzetemperatur [°C] | 315 | 296 | 271 | 309 | 290 | 271 | 316 | 298 | 274 | 309 | 301 | 313 | 296 | 273 |
| | | | | | | | | | | | | | | |
| Anzahl Oberflächendefek-te pro $cm^2$ | 134 | 237 | 375 | 102 | 232 | 574 | 320 | 433 | 570 | 482 | 1002 | 324 | 553 | 757 |
| | | | | | | | | | | | | | | |
| Kerbschlagzähigkeit in $Kl/m^2$ (23 °C) | 78 | 71 | 72 | | | | | | | | | | 42 | 40 |
| | | | | | | | | | | | | | | |
| Kerbschlagzähigkeit in $kJ/m^2$ (-30 °C) | 15,2 | 14,6 | 13,4 | | | | | | | | | | 11,2 | 11,1 |

**Tab. 2:**

| Beispiel | 17 | 18 | 19 | 20 | 21 | 22 | 23 | 24 |
|---|---|---|---|---|---|---|---|---|
| | erfindungsgemäß | | Vergleich | | Vergleich | | Vergleich | |
| Längenanteil des bezeichneten Bereiches in welchem Elemente und Gehäuse die in den Beispielbeschreibungen genannten Bedingungenen erfüllen in % | | | | | | | | |
| Bereich ab der Plastifizierzone bis zur Düsenplatte | 74 | 74 | 0 | 0 | 26 | 26 | 48 | 48 |
| | | | | | | | | |
| Durchsatz [kg/h] | 70 | 145 | 75 | 145 | 75 | 145 | 70 | 145 |
| | | | | | | | | |
| Drehzahl [min^-1] | 200 | 500 | 200 | 500 | 200 | 500 | 200 | 500 |
| | | | | | | | | |
| Energieeintrag [kWh/kg] | 0,11 | 0,13 | 0,09 | 0,12 | 0,10 | 0,13 | 0,11 | 0,13 |
| | | | | | | | | |
| Schmelzetemperatur [°C] | 283 | 299 | 275 | 291 | 285 | 302 | 284 | 302 |
| | | | | | | | | |
| Anzahl Oberflächendefekte pro $cm^2$ | 798 | 773 | 1509 | 1461 | 822 | 1425 | 1043 | 1102 |

**Patentansprüche**

1. Vorrichtung zur Extrusion von Polymermischungen bestehend aus einem Zwei- oder Mehrwellenextruder mit gleichsinnig rotierenden Wellen (2, 3), wobei zumindest ab der Plastifizierzone des Extruders und den sich daran anschließenden Zonen in Förderrichtung bis zum Polymerschmelzeaustrag an der Düsenplatte das Verhältnis zwischen Schneckenaußendurchmesser (Da) und Gehäuseinnendurchmesser über einen Längenanteil von mindestens 50 % der Schnecke im Bereich ab der Plastifizierzone des Extruders und den sich daran anschließenden Zonen in Förderrichtung bis zum Polymerschmelzeaustrag an der Düsenplatte größer oder gleich 96,4 und und kleiner 98,4 % ist und die Summe aus Schneckenaußendurchmesser (Da) und Schneckenkerndurchmesser (Di) dividiert durch den doppelten Achsabstand größer oder gleich 97,9 und kleiner 99,1 % ist;
und wobei zumindest ab der Plastifizierzone des Extruders und den sich daran anschließenden Zonen in Förderrichtung bis zum Polymerschmelzeaustrag an der Düsenplatte mindestens ein Förderelement vorhanden ist, **dadurch gekennzeichnet, daß** bei mindestens einem Förderelement das Verhältnis zwischen Schneckenaußendurchmesser (Da) und Gehäuseinnendurchmesser größer oder gleich 96,4 und und kleiner 98,4 % ist und die Summe aus Schneckenaußendurchmesser (Da) und Schneckenkerndurchmesser (Di) dividiert durch den doppelten Achsabstand größer oder gleich 97,9 und kleiner 99,1_% ist.

2. Vorrichtung gemäß Anspruch 1, **dadurch gekennzeichnet, dass** die Vorrichtung zumindest ab der Plastifizierzone des Extruders und den sich daran anschließenden Zonen in Förderrichtung bis zum Polymerschmelzeaustrag an der Düsenplatte mindestens ein Knetelement aufweist und wobei bei mindestens einem Knetelement das Verhältnis zwischen Schneckenaußendurchmesser (Da) und Gehäuseinnendurchmesser größer oder gleich 96,4 und kleiner 98,4 % ist und die Summe aus Schneckenaußendurchmesser (Da) und Schneckenkerndurchmesser (Di) dividiert durch den doppelten Achsabstand größer oder gleich 97,9 und kleiner 99,1 % ist.

3. Vorrichtung gemäß Anspruch 1 oder 2, **dadurch gekennzeichnet, dass** das Verhältnis zwischen der Länge der Extruderschnecke und dem Schneckenaußendurchmesser (Da) im Bereich von 20 bis 50 liegt.

4. Vorrichtung gemäß einem der Ansprüche 1 bis 3, **dadurch gekennzeichnet, dass** der Durchmesser der Gehäusebohrungen im Bereich von 18 mm bis 180 mm liegt.

5. Verwendung der Vorrichtung nach einem der Ansprüche 1 bis 4 zur Herstellung von Polymerzusammensetzungen.

**6.** Verfahren zur Herstellung von Polymermischungen, enthaltend wenigstens ein Polymer, wenigstens ein Elastomer und wenigstens ein Pigment, wobei die Komponenten der Polymermischungen auf einer Vorrichtung gemäß einem der Ansprüche 1 bis 4 verarbeitet werden.

**7.** Verfahren nach Anspruch 6, **dadurch gekennzeichnet, dass** die Polymermischungen folgende Bestandteile enthalten:

A) 10 - 99,899 Gew.-Teile, bevorzugt 20 - 98 Gew.-Teile, besonders bevorzugt 30 - 95 Gew.-Teile, aromatisches Polycarbonat und/oder aromatisches Polyestercarbonat und/oder andere Thermoplaste,
B) optional 0,1 - 75 Gew.-Teile, bevorzugt 0,2 - 60 Gew.-Teile, weiter bevorzugt 0,5 - 55 Gew.-Teile, besonders bevorzugt 0,5 - 52 Gew.-Teile, Elastomer, bevorzugt kautschukmodifiziertes Pfropfpolymerisat,
C) 0,001 - 10 Gew.-Teile, bevorzugt 0,01 - 5 Gew.-Teile, besonders bevorzugt 0,1 - 3 Gew.-Teile organische oder anorganische Pigmente, bevorzugt Ruß
D) gegebenenfalls 0 - 5 Gew.-Teile, bevorzugt 0,05 - 3 Gew.-Teile, besonders bevorzugt 0,1 - 1,5 Gew.-Teile Additive,

wobei alle Gewichtsteilangaben in der vorliegenden Anmeldung so normiert sind, dass die Summe der Gewichtsteile aller Komponenten A+B+C+D in der Zusammensetzung 100 ergeben.

**8.** Verfahren nach Anspruch 7, **dadurch gekennzeichnet, dass** als Thermoplaste (Komponente A) Polycarbonat, Polyamid, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste verwendet werden.

**9.** Verfahren nach Anspruch 7 oder 8, **dadurch gekennzeichnet, dass** als Komponente B wenigstens eines der folgenden Monomere und Pfropfgrundlagen verwendet werden:

B.1 5 bis 95 Gew.-%, vorzugsweise 20 bis 90 Gew.-%, besonders bevorzugt 30 bis 60 Gew.-%, wenigstens eines Vinylmonomeren auf.
B.2 95 bis 5 Gew.-%, vorzugsweise 80 bis 10 Gew.-%, besonders bevorzugt 70 bis 40 Gew.-%, einer oder mehrerer Pfropfgrundlagen mit Glasübergangstemperaturen < 10°C, vorzugsweise < 0°C, besonders bevorzugt < -20°C.

**10.** Verfahren nach einem der Ansprüche 7 bis 9, **dadurch gekennzeichnet, dass** wenigstens ein Pigment (Komponente C) ausgewählt aus Titandioxid, Talkum, Calciumcarbonat, Bariumsulfat, Zinksulfid, Zinkoxid, Eisenoxid, Chromoxid, weitere organische und anorganische Farbpigmente, Graphit, Graphen, Carbon Nanotubes, Schichtsilikate und Ruß verwendet wird.

**11.** Verfahren nach einem der Ansprüche 7 bis 10, **dadurch gekennzeichnet, dass** der Polymerzusammensetzung als Additive (Komponente D) Flammschutzmittel, Thermo-Stabilisatoren, Antioxidantien, UV-Stabilisatoren und / oder Entformungsmittel zugefügt werden.

## Claims

**1.** Apparatus for extruding polymer mixtures, composed of a twin- or multiscrew extruder with corotating screws (2, 3), where, at least starting from the plastifying zone of the extruder and the zones subsequent thereto in the direction of conveying, as far as the polymer-melt discharge at the die plate, the ratio between external screw diameter (Da) and internal barrel diameter over a longitudinal proportion of at least 50% of the screw in the region starting from the plastifying zone of the extruder and the zones subsequent thereto in the direction of conveying, as far as the polymer-melt discharge at the die plate, is greater than or equal to 96.4% and smaller than 98.4%, and the sum of external screw diameter (Da) and screw root diameter (Di) divided by twice the axial separation is greater than or equal to 97.9% and smaller than 99.1%;
and where, at least starting from the plastifying zone of the extruder and the zones subsequent thereto in the direction of conveying, as far as the polymer-melt discharge at the die plate, at least one conveying element is present,

**characterized in that**, for at least one conveying element, the ratio between external screw diameter (Da) and internal barrel diameter is greater than or equal to 96.4% and smaller than 98.4% and the sum of external screw diameter (Da) and screw root diameter (Di) divided by twice the axial separation is greater than or equal to 97.9% and smaller than 99.1%.

**2.** Apparatus according to Claim 1, **characterized in that** the apparatus has, at least starting from the plastifying zone of the extruder and the zones subsequent thereto in the direction of conveying, as far as the polymer-melt discharge at the die plate, at least one kneading element, and where, for at least one kneading element, the ratio between external screw diameter (Da) and internal barrel diameter is greater than or equal to 96.4% and smaller than 98.4% and the sum of external screw diameter (Da) and screw root diameter (Di) divided by twice the axial separation is greater than or equal to 97.9% and smaller than 99.1%.

**3.** Apparatus according to Claim 1 or 2, **characterized in that** the ratio between the length of the extruder screw and the external screw diameter (Da) is in the range from 20 to 50.

**4.** Apparatus according to any of Claims 1 to 3, **characterized in that** the diameter of the barrel bores is in the range from 18 mm to 180 mm.

**5.** Use of the apparatus according to any of Claims 1 to 4 for producing polymer compositions.

**6.** Process for producing polymer mixtures comprising at least one polymer, at least one elastomer and at least one pigment, where the components of the polymer mixtures are processed in an apparatus according to any of Claims 1 to 4.

**7.** Process according to Claim 6, **characterized in that** the polymer mixtures comprise the following constituents:

A) from 10 to 99.899 parts by weight, preferably from 20 to 98 parts by weight, particularly preferably from 30 to 95 parts by weight, of aromatic polycarbonate and/or aromatic polyester carbonate and/or other thermoplastics,
B) optionally from 0.1 to 75 parts by weight, preferably from 0.2 to 60 parts by weight, more preferably from 0.5 to 55 parts by weight, particularly preferably from 0.5 to 52 parts by weight, of elastomer, preferably rubber-modified graft polymer,
C) from 0.001 to 10 parts by weight, preferably from 0.01 to 5 parts by weight, particularly preferably from 0.1 to 3 parts by weight, of organic or inorganic pigments, preferably carbon black,
D) optionally from 0 to 5 parts by weight, preferably from 0.05 to 3 parts by weight, particularly preferably from 0.1 to 1.5 parts by weight, of additives,

where all of the parts by weight data in the present application have been standardized in such a way that the sum of the parts by weight of all of components A+B+C+D in the composition is 100.

**8.** Process according to Claim 7, **characterized in that** the thermoplastics (component A) used comprise polycarbonate, polyamide, polyester, in particular polybutylene terephthalate and polyethylene terephthalate, polylactide, polyether, thermoplastic polyurethane, polyacetal, fluoropolymer, in particular polyvinylidene fluoride, polyether sulphones, polyolefin, in particular polyethylene and polypropylene, polyimide, polyacrylate, in particular poly(methyl) methacrylate, polyphenylene oxide, polyphenylene sulphide, polyether ketone, polyaryl ether ketone, styrene polymers, in particular polystyrene, styrene copolymers, in particular styrene-acrylonitrile copolymer, acrylonitrile-butadiene-styrene block copolymers, polyvinyl chloride or a blend of at least two of the thermoplastics mentioned.

**9.** Process according to Claim 7 or 8, **characterized in that** component B used comprises at least one of the following monomers and graft bases:

B.1 from 5 to 95% by weight, preferably from 20 to 90% by weight, particularly preferably from 30 to 60% by weight, of at least one vinyl monomer.
B.2 from 95 to 5% by weight, preferably from 80 to 10% by weight, particularly preferably from 70 to 40% by weight, of one or more graft bases with glass transition temperatures $< 10°C$, preferably $< 0°C$, particularly preferably $< -20°C$.

**10.** Process according to any of Claims 7 to 9, **characterized in that** at least one pigment (component C) selected from titanium dioxide, talc, calcium carbonate, barium sulphate, zinc sulphide, zinc oxide, iron oxide, chromium oxide, other

organic and inorganic colour pigments, graphite, graphene, carbon nanotubes, phyllosilicates and carbon black is used.

11. Process according to any of Claims 7 to 10, **characterized in that** additives (component D) added to the polymer composition comprise flame retardants, heat stabilizers, antioxidants, UV stabilizers and/or mould-release agents.

**Revendications**

1. Dispositif d'extrusion de mélanges de polymères constitué d'une extrudeuse à deux ou plusieurs vis avec des arbres (2, 3) tournant dans le même sens, dans lequel, au moins depuis la zone de plastification de l'extrudeuse et les zones y faisant suite dans le sens de transport jusqu'à la sortie de la masse fondue de polymère au niveau de la plaque de filière, le rapport entre le diamètre extérieur (Da) de la vis et le diamètre intérieur du cylindre sur une portion de longueur d'au moins 50 % de la vis dans la zone depuis la zone de plastification de l'extrudeuse et les zones y faisant suite dans le sens de transport jusqu'à la sortie de la masse fondue de polymère au niveau de la plaque de filière, est supérieur ou égal à 96,4 et inférieur à 98,4 % et la somme du diamètre extérieur (Da) de la vis et du diamètre du noyau (Di) de la vis divisé par deux fois la distance axiale est supérieure ou égale à 97,9 et inférieure à 99,1 % ; et dans lequel au moins un élément de transport est présent au moins à partir de la zone de plastification de l'extrudeuse et des zones y faisant suite dans la direction de transport jusqu'à la sortie de la masse fondue de polymère au niveau de la plaque de filière, **caractérisé en ce que** pour au moins un élément de transport le rapport entre le diamètre extérieur (Da) de la vis et le diamètre intérieur du cylindre est supérieur ou égal à 96,4 et inférieur à 98,4 % et la somme du diamètre extérieur (Da) de la vis et du diamètre du noyau (Di) de la vis divisée par deux fois la distance axiale est supérieure ou égale à 97,9 et inférieure à 99,1 %.

2. Dispositif selon la revendication 1, **caractérisé en ce que** le dispositif présente au moins un élément de malaxage au moins depuis la zone de plastification de l'extrudeuse et les zones y faisant suite dans la direction de transport jusqu'à la sortie de la masse fondue de polymère au niveau de la plaque de filoière, et dans lequel dans au moins un élément de malaxage le rapport entre le diamètre extérieur (Da) de la vis et le diamètre intérieur du cylindre est supérieur ou égal à 96,4 et inférieur à 98,4 % et la somme du diamètre extérieur (Da) de la vis et du diamètre du noyau (Di) de la vis divisée par deux fois la distance axiale est supérieure ou égale à 97,9 et inférieure à 99,1 %.

3. Dispositif selon la revendication 1 ou 2, **caractérisé en ce que** le rapport entre la longueur de la vis d'extrudeuse et le diamètre extérieur (Da) de la vis est dans la plage de 20 à 50.

4. Dispositif selon l'une quelconque des revendications 1 à 3, **caractérisé en ce que** le diamètre des perçages dans la chemise se situe dans la plage de 18 mm à 180 mm.

5. Utilisation du dispositif selon l'une quelconque des revendications 1 à 4 pour la préparation de compositions polymères.

6. Procédé pour la préparation de mélanges polymères, contenant au moins un polymère, au moins un élastomère et au moins un pigment, les composants des mélanges polymères étant transformés sur un dispositif selon l'une quelconque des revendications 1 à 4.

7. Procédé selon la revendication 6, **caractérisé en ce que** les mélanges polymères contiennent les constituants suivants :

A) 10-99,899 parties en poids, de préférence 20-98 parties en poids, de manière particulièrement préférée 30-95 parties en poids, de polycarbonate aromatique et/ou de polyestercarbonate aromatique et/ou d'autres thermoplastiques,
B) éventuellement 0,1-75 parties en poids, de préférence 0,2-60 parties en poids, plus préférablement 0,5-55 parties en poids, de manière particulièrement préférée 0,5-52 parties en poids, d'élastomère, de préférence un polymère greffé modifié par un caoutchouc,
C) 0,001-10 parties en poids, de préférence 0,01-5 parties en poids, de manière particulièrement préférée 0,1-3 parties en poids, de pigments organiques ou inorganiques, de préférence une suie
D) le cas échéant 0-5 parties en poids, de préférence 0,05-3 parties en poids, de manière particulièrement préférée 0,1-1,5 partie en poids d'additifs,

toutes les indications de parties en poids dans la présente demande étant normalisées de manière telle que la somme des parties en poids de tous les composants A + B + C + D dans la composition vaut 100.

**8.** Procédé selon la revendication 7, **caractérisé en ce qu'**on utilise comme thermoplastiques (composant A) un polycarbonate, un polyamide, un polyester, en particulier le poly(téréphtalate de butylène) et le poly(téréphtalate d'éthylène), un polylactide, un polyéther, un polyuréthane thermoplastique, un polyacétal, un polymère fluoré, en particulier le poly(fluorure de vinylidène), une polyéthersulfone, une polyoléfine, en particulier le polyéthylène et le polypropylène, un polyimide, un polyacrylate, en particulier le poly(méthacrylate de méthyle), un poly(oxyde de phénylène), un poly(sulfure de phénylène), une polyéthercétone, une polyaryléthercétone, des polymères de styrène, en particulier le polystyrène, des copolymères de styrène, en particulier un copolymère de styrène-acrylonitrile, des copolymères séquencés d'acrylonitrile-butadiène-styrène, le poly(chlorure de vinyle) ou un mélange d'au moins deux des thermoplastiques mentionnés.

**9.** Procédé selon la revendication 7 ou 8, **caractérisé en ce qu'**on utilise, comme composant B, au moins un(e) des monomères et des bases de greffage suivant(e)s :

B.1 5 à 95% en poids, de préférence 20 à 90% en poids, de manière particulièrement préférée 30 à 60% en poids, d'au moins un monomère de vinyle sur

B.2 95 à 5% en poids, de préférence 80 à 10% en poids, de manière particulièrement préférée 70 à 40% en poids, d'une ou de plusieurs bases de greffage présentant des températures de transition vitreuse < 10°C, de préférence < 0°C, de manière particulièrement préférée < -20°C.

**10.** Procédé selon l'une quelconque des revendications 7 à 9, **caractérisé en ce qu'**on utilise au moins un pigment (composant C) choisi parmi le dioxyde de titane, le talc, le carbonate de calcium, le sulfate de baryum, le sulfure de zinc, l'oxyde de zinc, l'oxyde de fer, l'oxyde de chrome, d'autres pigments colorés organiques et inorganiques, le graphite, le graphène, les nanotubes de carbone, les silicates à couches et la suie.

**11.** Procédé selon l'une quelconque des revendications 7 à 10, **caractérisé en ce que** la composition polymère est additionnée, en tant qu'additifs (composant D), d'agents ignifuges, de stabilisants thermiques, d'antioxydants, de stabilisants aux UV et/ou d'agents de démoulage.

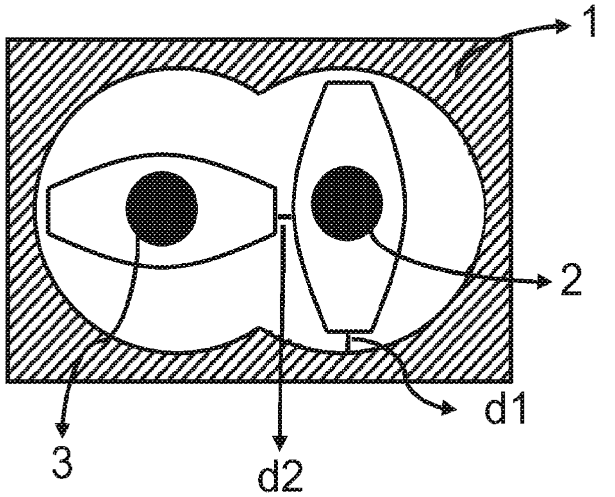


Fig. 1

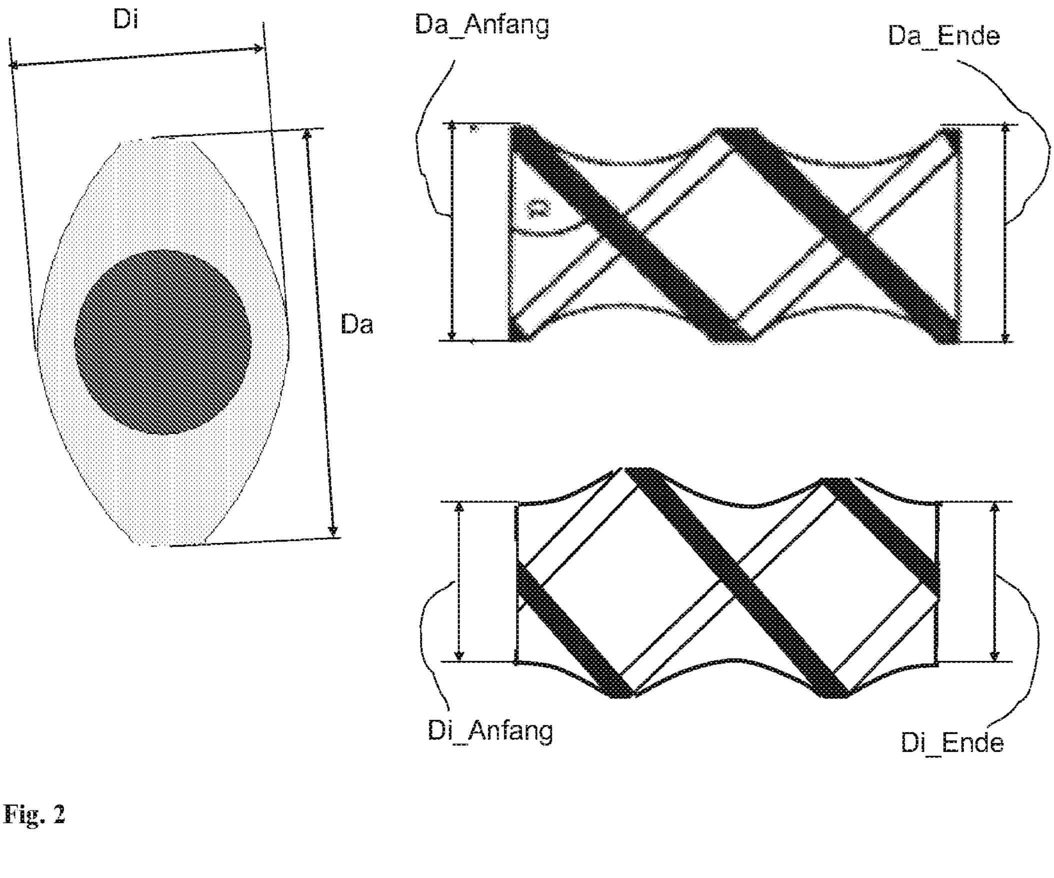


Fig. 2

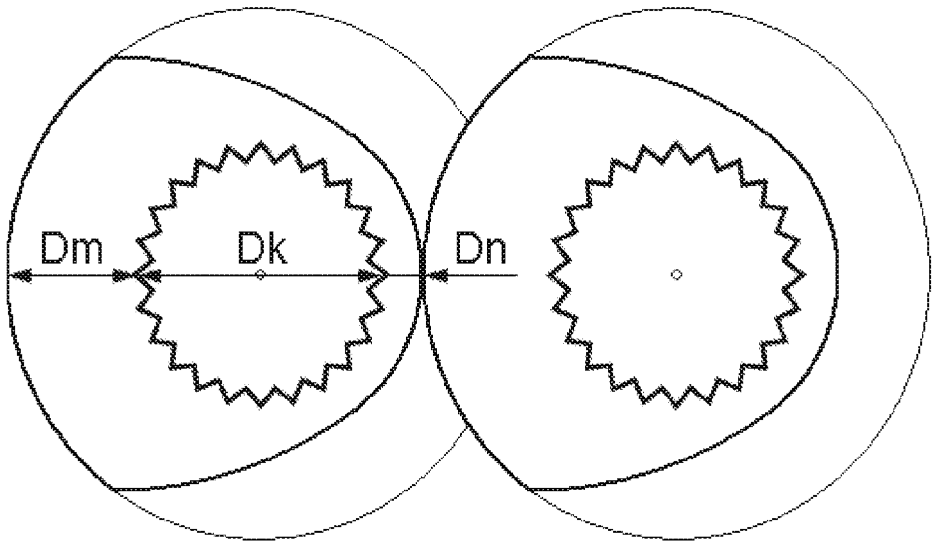


Fig. 3

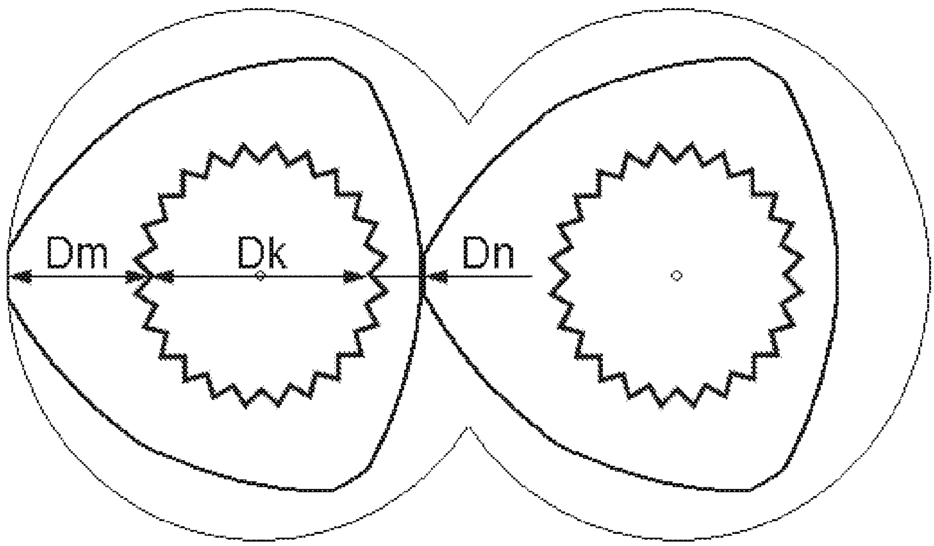


Fig. 4

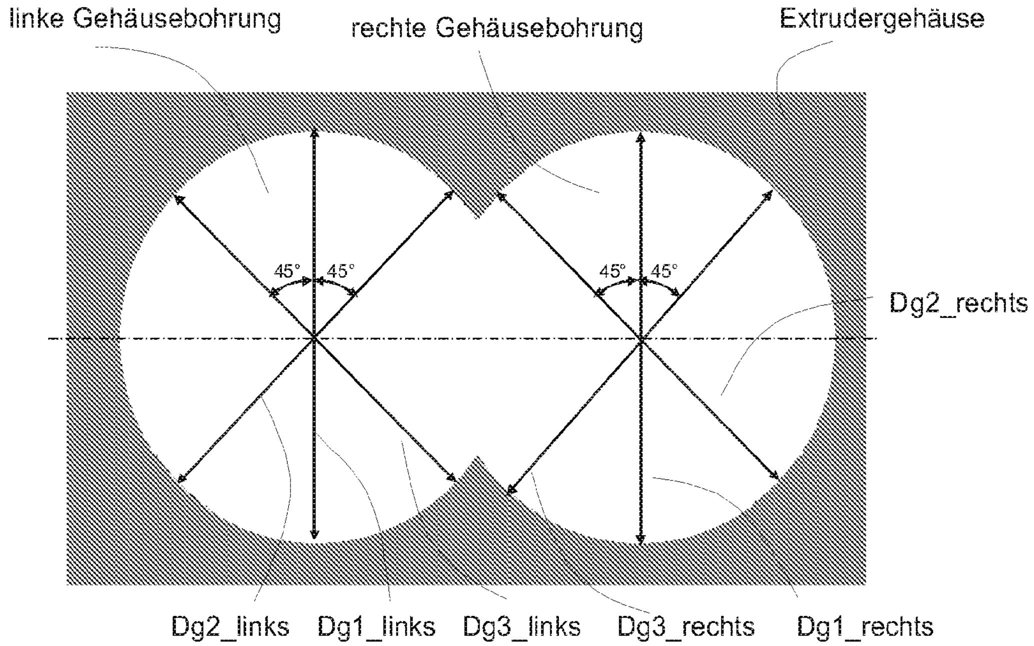
linke Gehäusebohrung
rechte Gehäusebohrung
Extrudergehäuse
45°
45°
45°
45°
Dg2_rechts
Dg2_links
Dg1_links
Dg3_links
Dg3_rechts
Dg1_rechts

Fig. 5

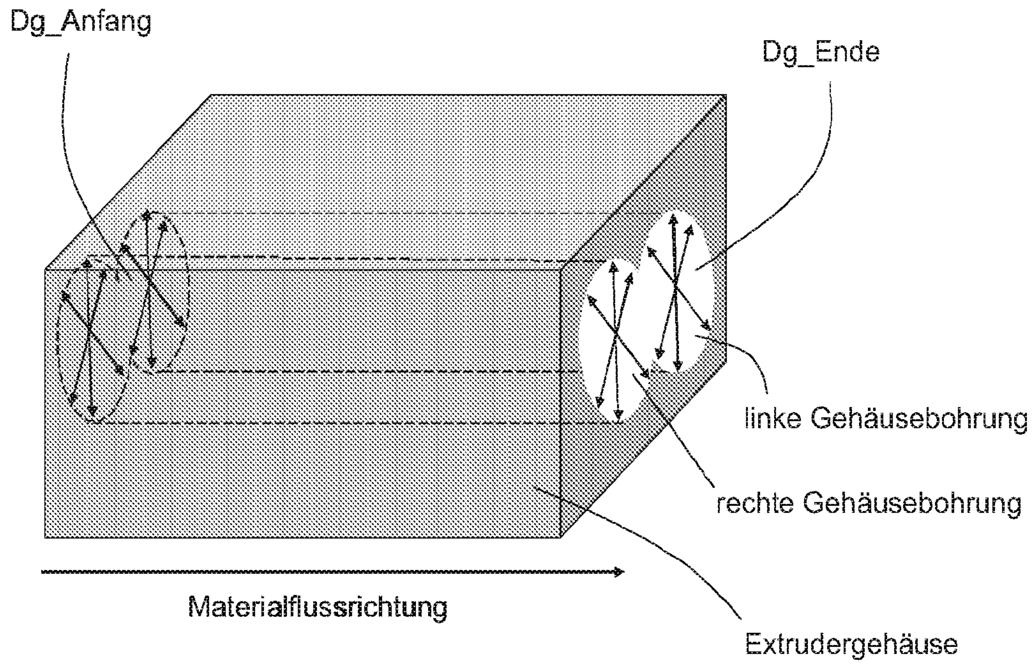
Dg_Anfang
Dg_Ende
linke Gehäusebohrung
rechte Gehäusebohrung
Materialflussrichtung
Extrudergehäuse

Fig. 6

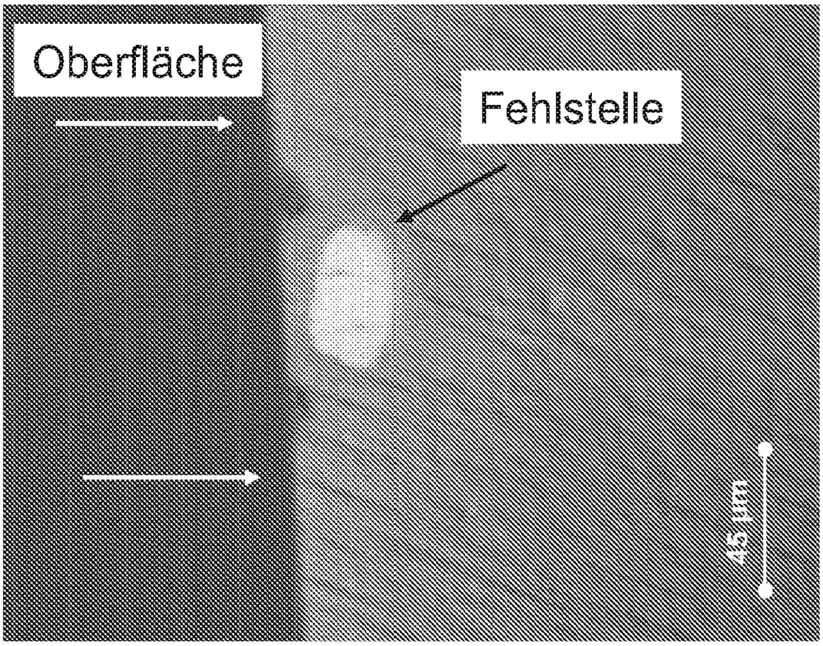
Oberfläche
Fehlstelle
45 µm

Fig. 7

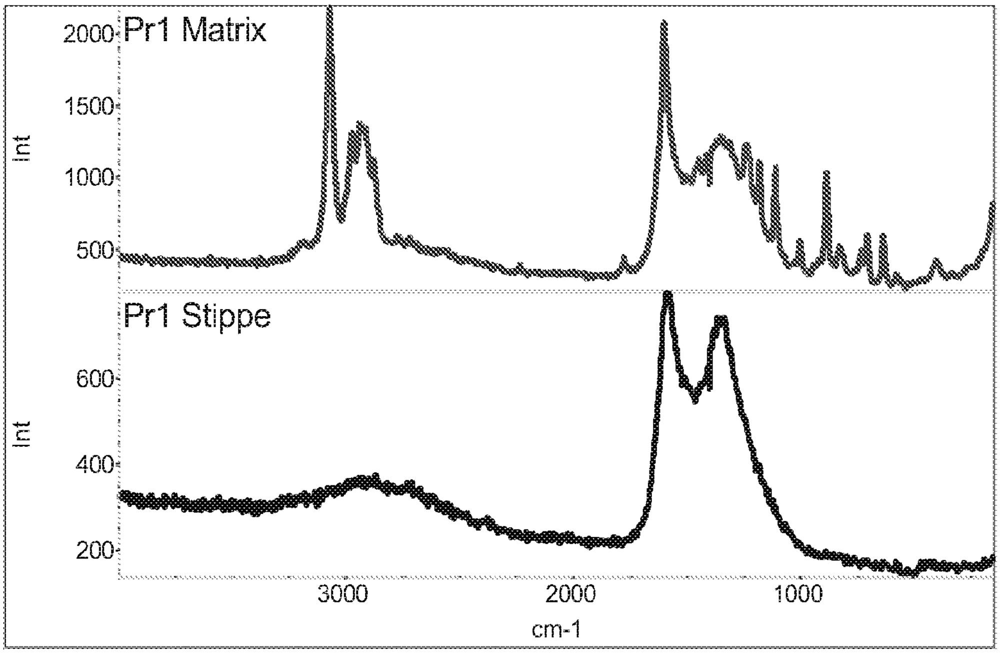
Pr1 Matrix
Pr1 Stippe
Int
2000
1500
1000
500
600
400
200
3000
2000
1000
cm-1

Fig. 8

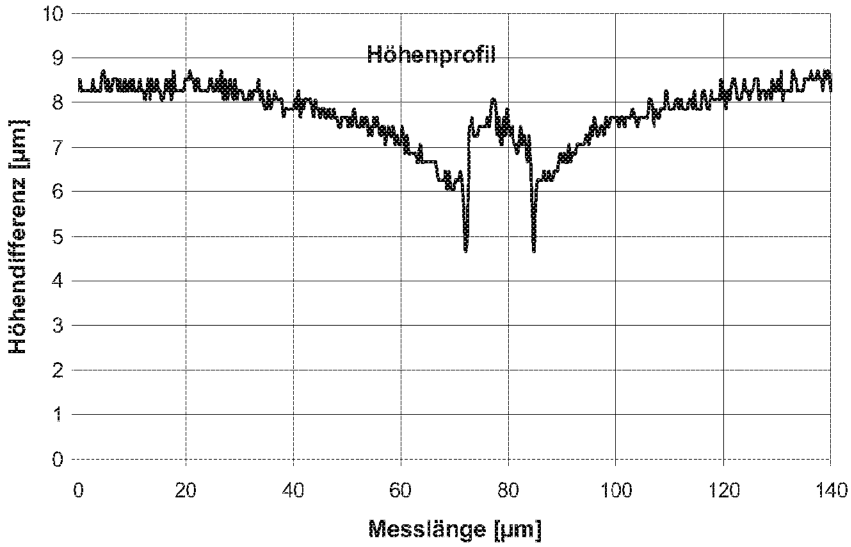
Höhenprofil
Höhendifferenz [µm]
Messlänge [µm]
0
1
2
3
4
5
6
7
8
9
10
0
20
40
60
80
100
120
140

Fig. 9

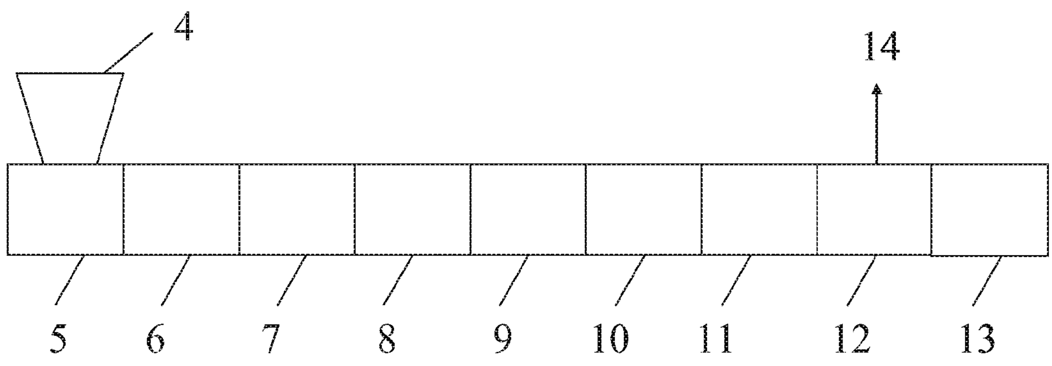
4
14
5
6
7
8
9
10
11
12
13

Fig. 10

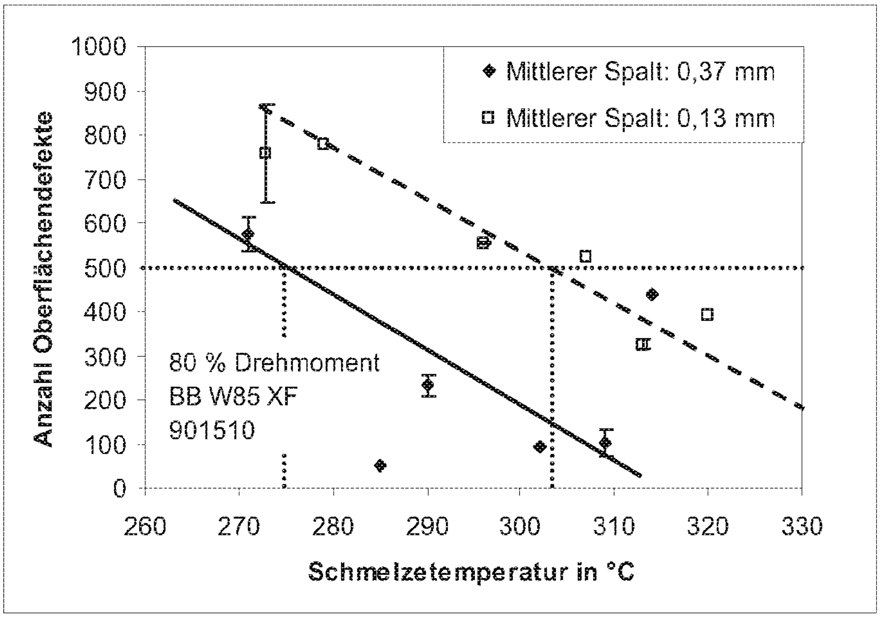
1000
900
800
700
600
500
400
300
200
100
0
Anzahl Oberflächendefekte
Mittlerer Spalt: 0,37 mm
Mittlerer Spalt: 0,13 mm
80 % Drehmoment
BB W85 XF
901510
260
270
280
290
300
310
320
330
Schmelzetemperatur in °C

Fig. 11

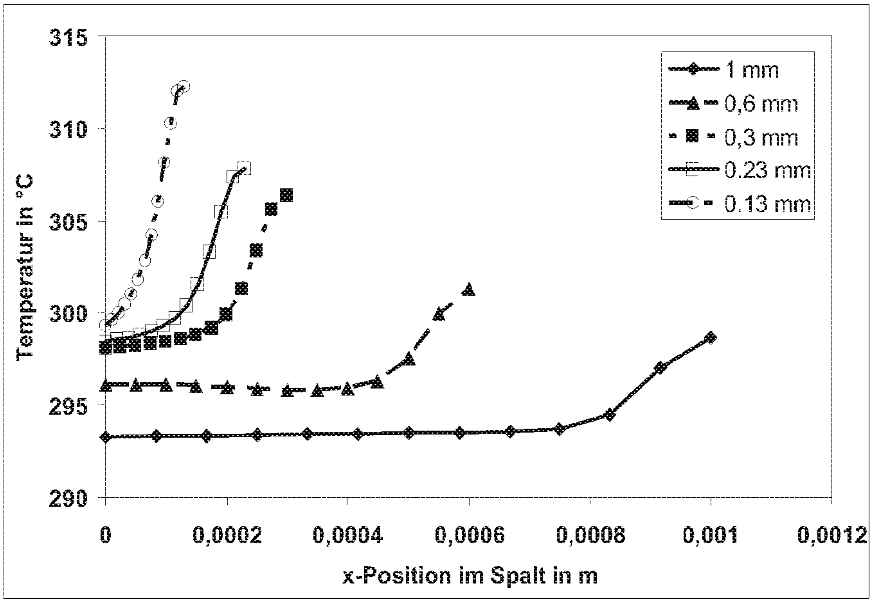
315
310
305
300
295
290
Temperatur in °C
1 mm
0,6 mm
0,3 mm
0.23 mm
0.13 mm
0
0,0002
0,0004
0,0006
0,0008
0,001
0,0012
x-Position im Spalt in m

Fig. 12

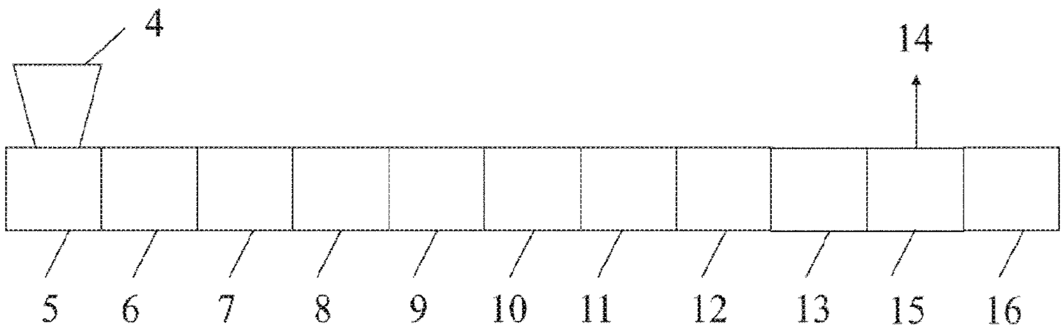


Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004010553 A1
- JP 2008094984 B
- US 6180702 B
- WO 2004094128 A
- US 4352568 A
- US 5487602 A
- WO 2009153000 A1
- DE 3832396 A
- FR 1561518 A
- DE OS2035390 A
- US PS3644574 A
- DE OS2248242 A
- GB PS1409275 A
- US P4937285 P
- DE OS3704657 A
- DE OS3704655 A
- DE OS3631540 A
- DE OS3631539 A
- EP 0363608 A
- EP 0640655 A
- WO 0000541 A
- WO 0118105 A


### In der Beschreibung aufgeführte Nicht-Patentliteratur


- Plastics Processing Technology Online-News Letter. The Japan Steel Works, Ltd., 04 January 2001
- Effect of kneading block tip clearance on performance of co-rotating twin-screw extruders. *ANTEC-Conference proceedings*, 1999, vol. 1, 222
- **TAKESHI ISHIKAWA et al.** 3-D Numerical Simulations of Nonisothermal Flow in Co-Rotating Twin-Screw Extruders. *Polymer Engineering and Science*, 01 February 2000, vol. 40, 357-364
- Chemistry and Physics of Polycarbonates. **SCHNELL**. Polymer Reviews. Interscience Publishers, 1964, vol. 9
- **H. SCHNELL**. Chemistry and Physics of Polycarbonates. Interscience Publishers, 1964, 28, 102
- **D.G. LEGRAND** ; **J.T. BENDLER**. Handbook of Polycarbonate Science and Technology. Marcel Dekker, 2000, 72
- **ULLMANNS**. Enzyklopädie der Technischen Chemie. 1980, vol. 19, 280
- **M. HOFFMANN** ; **H. KRÖMER** ; **R. KUHN**. Polymeranalytik I und II. Georg Thieme-Verlag, 1977
- **W. SCHOLTAN** ; **H. LANGE**. *Kolloid, Z. und Z. Polymere*, 1972, vol. 250, 782-1796
- Ullmann’s Encyclopedia of Industrial Chemistry. Wiley-VCH, 2010
- **OHN MURPHY**. Additives for Plastics Handbook. Elsevier, 1999
- **HANS ZWEIFEL**. Plastics Additives Handbook. Hanser, 2001
- Ullmanns Enzyklopädie der technischen Chemie. 1979, vol. 18, 301
- **HOUBEN-WEYL**. *Methoden der organischen Chemie*, vol. 12/1, 43
- *Beilstein*, vol. 6, 177
- **KLEMENS KOHLGRÜBER**. Der gleichläufige Doppelschneckenextruder